# EUROPÄISCHE PATENTSCHRIFT

(11) **EP 3 221 929 B1**
(45) Veröffentlichungstag und Bekanntmachung des Hinweises auf die Patenterteilung: **05.01.2022**
(21) Anmeldenummer: 15791307.0
(22) Anmeldetag: 10.11.2015
(51) Int. Cl.: H01R 13/62, H01R 35/04, G06F 1/16, H04M 1/02

(54) **MAGNETISCHE VERBINDUNGSVORRICHTUNG**
MAGNETIC CONNECTING APPARATUS
DISPOSITIF DE LIAISON MAGNÉTIQUE

(30) Priorität: 19.11.2014 DE 102014116948; 29.09.2015 DE 102015116490
(43) Veröffentlichungstag der Anmeldung: 27.09.2017
(73) Patentinhaber: Rosenberger Hochfrequenztechnik GmbH & Co. KG, 83413 Fridolfing (DE)
(72) Erfinder: MICHELMANN, Folke, 84529 Tittmoning (DE); SCHICHL, Markus, A-5201 Seekirchen (AT); SCHUSTER, Alexander, 83224 Ruhpolding (DE)
(74) Vertreter: Lorenz, Markus
(86) Internationale Anmeldenummer: PCT/EP2015/076145
(87) Internationale Veröffentlichungsnummer: WO 2016/078962

(56) Entgegenhaltungen:
- WO-A1-2010/088695
- WO-A1-2014/120966
- WO-A2-03/100792
- US-A- 4 865 553
- US-A1- 2013 170 126
- US-A1- 2014 273 546
- US-B1- 6 272 324
- None

## Beschreibung

Die Erfindung betrifft eine magnetische Verbindungsvorrichtung zur Verbindung von zwei Einheiten.

Grundsätzlich ist eine solche magnetische Verbindungsvorrichtung zur Herstellung jeder erdenklichen Verbindung einsetzbar und damit insbesondere für die Herstellung einer elektrischen Verbindung geeignet.

Zur Herstellung einer physikalischen elektrischen Verbindung zweier Einheiten sind im Stand der Technik und in der Praxis mechanische Steckverbinder weit verbreitet. Durch diese ist es möglich genannte Einheiten entweder direkt oder über eine Kabelverbindung mechanisch und elektrisch miteinander zu koppeln. Bekannte Probleme solcher Steckverbindungen sind Abnutzungs- und Alterungserscheinungen durch wiederholtes Trennen und Kontaktieren der Stecker bis hin zu einem Stecker- und/oder Kabelbruch bzw. einer dauerhaften Beschädigung der Steckverbindung bei mechanischer Überbeanspruchung. Vor allem durch die feste bzw. starre Positionierung der üblichen Steckverbinder kann leicht eine mechanische Überbeanspruchung, beispielsweise durch Verdrehen der Einheiten zueinander, auftreten. Eine flexiblere Steckverbindung kann nur durch hohen, technischen und somit wirtschaftlichen Aufwand, beispielsweise durch spezielle Gelenkverbindungen, realisiert werden. Weiterhin zeigen selbst diese Maßnahmen in Folge häufiger Beanspruchung Verschleißerscheinungen, wodurch die Lebensdauer der Einheiten bzw. deren Komponenten entsprechend einschränkt ist.

Zur Lösung dieser Probleme und Umgehung einer notwendigen starren mechanischen Kupplung der Steckverbinder sind im Stand der Technik magnetische Verbindungsvorrichtungen bekannt. Beispielsweise wird in der DE 10 2008 038 649 A1 eine Vorrichtung zum Herstellen einer Verbindung zwischen einem elektrischen Gerät und einem mit dem Gerät verbindbaren Kabel bzw. einer weiteren elektrischen Vorrichtung vorgestellt. Die Vorrichtung soll einen Adapter mit zwei Adapterteilen mit Magnetelementen umfassen, wodurch eine Verbindung des elektrischen Gerätes mit einem weiteren elektrischen Gerät, z. B. einem Ladegerät, einem Kopfhörer, einem Mikrofon oder einem Headset, geschaffen wird. Die Verbindung soll in einem ersten Schritt durch eine Grobführung über wenigstens einen Vorsprung und einen ringförmigen Rücksprung erfolgt, wozu ein entsprechend großes Spiel vorgesehen ist. Nach der Grobführung erfolgt im zweiten Schritt über die Magnetkräfte der Magnetelemente eine exakte Positionierung und Zentrierung der beiden Adapterteile zueinander.

Ein wesentlicher Vorteil dabei ist, dass der Benutzer die beiden Teile nur grob einander annähern muss und dabei nicht auf eine korrekte Kontaktierung und Zuordnung von Kontakten geachtet werden muss. Damit können Verbindungen auch an schwer zugänglichen Stellen schnell und mühelos vorgenommen werden. Gleichzeitig ist dabei sichergestellt, dass es im Falle einer zur hohen Belastung der Verbindung, durch die es z. B. zu Beschädigungen von Bauteilen kommen könnte, zu einer Lösung der Verbindung kommt, sobald die magnetischen Haltekräfte durch eine höhere Kraft von außen überwunden werden.

Die magnetische Verbindungsvorrichtung nach der DE 10 2008 038 649 A1 gibt die Ausrichtung der Steckelemente bzw. Verbindungsglieder zueinander fest vor. Somit wird beispielsweise eine Verdrehung der elektrischen Geräte relativ zueinander nicht toleriert und würde zwingend zum Öffnen der magnetischen und somit auch der elektrischen Verbindung führen. Die Flexibilität, beispielsweise einer Kabelverbindung, ist folglich durch die genaue Vorgabe des Annährungswinkels stark eingeschränkt. Sollen zwei elektrische Geräte direkt miteinander verbunden werden, wie z.B. mobile elektrische Geräte, Dockingstationen oder Eingabegeräte, so kann durch die fest vorgegebene Orientierung insbesondere der Benutzerkomfort deutlich reduziert sein.

Insbesondere bei mobilen elektrischen Geräten, wie z. B. Tablets, tragbaren Computern und Mobiltelefonen, kann es von Vorteil sein, Bildschirme, Tastaturen oder weitere elektrische Geräte zueinander gelenkig bzw. drehbar miteinander zu verbinden. Hierzu sind aus dem Stand der Technik gelenkig mechanische Verbindungen (Scharniere) bekannt.

Die gattungsgemäße Druckschrift WO 2010/088695 A1 betrifft eine flexible magnetische Verbindung. In einer Ausführungsform offenbart die WO 2010/088695 A1 eine Vorrichtung mit einem eine Ausnehmung aufweisenden Modul. Eine magnetische Anordnung ist in der Ausnehmung bewegbar und eine flexible Schaltung wirkt mit dem Modul zusammen, um die magnetische Anordnung in der Ausnehmung zu halten. Die Bewegung der magnetischen Anordnung wird durch magnetische Anziehung zwischen der magnetischen Anordnung und einer äußeren magnetischen Anordnung verursacht. Die flexible Schaltung enthält einen nachgiebigen Kontakt, der durch die Bewegung der magnetischen Anordnung seine Form zu verändern vermag.

Außerdem wird auf die US 2014/273546 A1 verwiesen, die ein elektrisches Verbindungssystem, insbesondere ein magnetisches Verbindungssystem, für elektronische Geräte offenbart. Ferner betrifft die WO 2014/120966 A1 einen elektrischen Kontakt und eine Steckverbindertechnik. Die US 6,272,324 B1 offenbart tragbare Funkkommunikationsvorrichtungen mit einer Klappdeckel. Die US 2013/170126 A1 betrifft ein mobiles Gerät mit zwei verbindbaren Gehäuseteilen zur Ausbildung verschiedenen Varianten zur Verwendung des Geräts. Außerdem betrifft die US 4,865,553 A einen elektrischen Steckverbinder zur Verwendung mit verschiedenen elektronischen Gerätschaften. Schließlich betrifft die WO 03/100792 A2 einen elektrischen Steckverbinder zur Verwendung in dem Scharnier eines elektronischen Geräts.

Der vorliegenden Erfindung liegt die Aufgabe zugrunde, eine vorteilhafte gelenkige bzw. drehbare Verbindung zwischen zwei Einheiten zu schaffen.

Diese Aufgabe wird durch die Ansprüche 1 und 14 gelöst.

Es wird vorgeschlagen, nach Anspruch 1, dass einer ersten Einheit wenigstens ein erstes Verbindungsglied und einer zweiten Einheit wenigstens ein zweites Verbindungsglied zugeordnet ist, wobei ein erstes Verbindungsglied und ein zweites Verbindungsglied ein Verbindungspaar bilden, wobei die Verbindungsglieder eines Verbindungspaares jeweils eine Mehrzahl von Kontakten aufweisen, wobei die Verbindungsglieder eines Verbindungspaares zueinander achsparallel angeordnet sind und magnetisch miteinander kontaktieren und wobei die Verbindungsglieder eines Verbindungspaares im kontaktierten Zustand relativ zueinander verdrehbar sind.

Bei der ersten Einheit und der zweiten Einheit handelt es sich vorzugsweise um elektrische oder elektronische Einheiten. Bei der Mehrzahl von Kontakten handelt es sich vorzugsweise um elektrische Kontakte, welche zur Übertragung von Daten und/oder Signalen und/oder zur Stromführung vorgesehen sind. Die Verbindungsglieder eines Verbindungspaares sind magnetisch miteinander verbunden. Ergänzend zu der magnetischen Verbindung ist eine mechanische Grobführung vorgesehen, um die Herstellung des Kontakts zwischen den Verbindungsgliedern und somit zwischen den Einheiten zu vereinfachen.

Die erfindungsgemäße magnetische Verbindungsvorrichtung zur Verbindung von zwei Einheiten ist insbesondere zur lösbaren Verbindung zwischen zwei Einheiten vorgesehen, das heißt, dass die beiden Einheiten temporär miteinander verbunden und anschließend wieder getrennt werden können. Vorzugsweise können durch wenigstens ein Verbindungspaar die nachfolgenden Einheiten verbunden werden.
(A) zwei Tablets,
(B) zwei Mobiltelefone,
(C) ein Tablet und/oder ein Mobiltelefon und/oder eine elektronische Einheit
(D) ein Tablet oder ein Mobiltelefon oder eine elektronische Einheit mit einer Tastatur und/oder einem Bildschirm oder einer weiteren elektronischen Einheit.

Vorzugsweise können erfindungsgemäß auch ein Mobiltelefon, ein Tablet oder eine elektronische Einheit mit einer Schale, einer Dockingstation, einem Gehäuse, einer Abdeckung, einem Sockel oder einem Aufnahmeteil verbunden werden.

Die erfindungsgemäße magnetische Verbindungsvorrichtung eignet sich darüber hinaus auch, den Bildschirm eines tragbaren Computers, insbesondere eines Laptops, eines Notebooks oder eines Netbooks, derart zu gestalten, dass der Bildschirm von diesem abnehmbar ist.

Die magnetische Verbindungsvorrichtung zur Verbindung von zwei Einheiten kann derart ausgebildet sein, dass die beiden Einheiten nur in einer Orientierung miteinander verbindbar sind. Dadurch wird eine präzise und eindeutige Verbindung der beiden elektrischen Einheiten sichergestellt. Alternativ kann jedoch beispielsweise auch vorgesehen sein, dass die beiden Einheiten um 180° verdreht miteinander verbindbar sind, derart, dass in einer ersten Orientierung, beispielsweise bei einem Laptop, der Bildschirm und die Tastatur, wenn diese in einer Ebene nebeneinander liegen, in die gleiche Richtung ausgerichtet sind, während in der um 180° gedrehten Anordnung der Bildschirm und die Tastatur, wenn diese flach in einer Ebene nebeneinander liegen, in zwei um 180° verschiedene Richtungen ausgerichtet sind. In Kombination damit, dass erfindungsgemäß vorgesehen ist, dass die Verbindungsglieder eines Verbindungspaares, mittels derer die Einheiten miteinander verbunden sind, zueinander verdrehbar sind, dass sich also der Winkel zwischen den verbundenen Einheiten verändern lässt, ergibt sich eine sehr flexible und anpassungsfähige Ausrichtung der Einheiten zueinander, die auf den gewünschten Einsatzzweck abgestimmt werden kann.

Die Erfindung ist nicht auf eine verdrehende Bewegung der Verbindungsglieder zueinander beschränkt. Andere Bewegungsarten, von einer einfachen linearen Bewegung über eine rotierende Bewegung bis hin zu einem komplexen Kurvenverlauf der Bewegung, sind ebenfalls realisierbar.

Im Gegensatz zum bekannten Stand der Technik ist es durch die erfindungsgemäße Ausgestaltung der Verbindungsglieder möglich, eine gelenkige Verbindung zwischen zwei Einheiten, z. B. einem elektrischen bzw. elektronischen Geräts und einem weiteren Gerät und/oder einem Kabel, herzustellen. Insbesondere können die verbundenen Einheiten zueinander verdreht bzw. bewegt werden, ohne dass die magnetische bzw. elektrische Verbindung getrennt wird. Dies stellt nicht nur eine deutlich robustere Verbindung dar als im Stand der Technik bekannt, sondern erhöht auch deutlich den Bedienkomfort für einen Benutzer. Durch die erfindungsgemäße Lösung kann eine wirtschaftlich günstige, langlebige und robuste Steckverbindung gewährleistet werden.

Erfindungsgemäß kann vorgesehen sein, dass die Verbindungsglieder eines Verbindungspaares jeweils wenigstens ein Magnetelement zur magnetischen Kontaktierung umfassen und wenigstens ein Magnetelement eines Verbindungspaares als Permanentmagnet ausgebildet ist.

Die genannte Ausführung ist von Vorteil, um die magnetische Kontaktierung einfach und wirtschaftlich zu realisieren. Durch die Verwendung von Permanentmagneten im Gegensatz zu beispielsweise einem Elektromagneten muss kein zusätzlicher Aufwand insbesondere in Form elektrischer Energie in die Verbindung bzw. deren Einsatz investiert werden. Ein Fachmann kann allerdings beliebige andere Realisierungen der Magnetelemente vorsehen, bis hin zu einem Elektropermanentmagneten. Die Verwendung eines Elektropermanentmagneten kann unter Umständen sogar von besonderem Vorteil sein, da sich ein solcher Magnet durch einen elektrischen Impuls "programmieren" bzw. in Magnetkraft und Ausrichtung variieren lässt. Die magnetische Verbindungsvorrichtung ist dadurch noch anpassungsfähiger.

Mit einem "Magnetelement" kann auch ein Element bzw. eine Anordnung gemeint sein, auf die ein Magnet eine magnetische Kraft ausübt. Beispielsweise kann an einem ersten Verbindungsglied ein Permanentmagnet und an einem zweiten Verbindungsglied ein beliebiges ferromagnetisches Material, beispielsweise ein weichmagnetisches Material, wie z. B. Eisen, vorgesehen sein.

Vorzugsweise weisen beide Verbindungsglieder eines Verbindungspaars Permanentmagnete auf.

Die Permanentmagnete sind vorzugsweise derart angeordnet und ausgerichtet, dass ein Permanentmagnet eines ersten Verbindungsglieds eines Verbindungspaars einen Permanentmagnet des anderen Verbindungsglieds des Verbindungspaars kontaktiert, wenn die Einheiten in der vorgesehenen Orientierung miteinander verbunden sind.

Erfindungsgemäß kann vorgesehen sein, dass die Verbindungsglieder, die Magnetelemente und die Kontakte eines Verbindungspaares derart ausgebildet sind, dass im Falle einer magnetischen Kontaktierung die Kontakte der jeweiligen Verbindungsglieder elektrisch miteinander kontaktieren.

Erfindungsgemäß kann vorgesehen sein, dass die Kontaktierung der Verbindungsglieder eines Verbindungspaars über ihre Mantelfläche bzw. ihren Umfang erfolgt. Im Unterschied dazu kontaktieren bekannte magnetische Verbindungsvorrichtungen stirnseitig.

Erfindungsgemäß kann vorgesehen sein, dass die Verbindungsglieder eines Verbindungspaars im kontaktierten Zustand durch ein Abwälzen bzw. Abrollen entlang ihrer Mantelfläche bzw. ihres Umfangs zueinander verdrehbar sind. Die bekannten stirnseitigen magnetischen Verbindungsvorrichtungen sind im Unterschied dazu nur um dieselbe Achse bzw. koaxial rotierbar.

Die Achsen der erfindungsgemäßen Verbindungsglieder eines Verbindungspaars sind vorzugsweise parallel, jedoch nicht koaxial angeordnet. Bei der erfindungsgemäß möglichen Verdrehung der Verbindungsglieder bleibt die achsparallele Ausrichtung der Verbindungsglieder bestehen, während sich die Verbindungsglieder aufeinander abwälzen bzw. abrollen. Vorzugsweise rotiert eine Achse eines Verbindungsglieds eines Verbindungspaars um die Achse des anderen Verbindungsglieds. Vorzugsweise bleibt der Abstand zwischen den Achsen dabei im Wesentlichen unverändert.

In einer Ausführung der Erfindung können die Magnetelemente derart ausgebildet sein, dass die Verbindungsglieder eines Verbindungspaares in wenigstens einer vorbestimmten Orientierung elektrisch und magnetisch kontaktierbar sind und sich in dieser Orientierung magnetisch anziehen, wobei die Verbindungsglieder eines Verbindungspaares derart gestaltet sind, dass sich die Verbindungsglieder eines Verbindungspaares im kontaktierten Zustand bei einer relativen Verdrehung zueinander zumindest über eine Teilfläche der Mantelfläche bzw. des Umfangs der Verbindungsglieder aufeinander abwälzen bzw. abrollen, wobei die elektrische und magnetische Kontaktierung bestehen bleibt.

Die Erfinder haben erkannt, dass sich eine Verdrehung der ersten Einheit zu der zweiten Einheit, wie sie zum Beispiel üblich ist, um den Bildschirm eines Laptops auf- oder zuzuklappen bzw. in seiner Ausrichtung gegenüber der Tastatur zu verschwenken, besonders einfach und zuverlässig durch die erfindungsgemäßen Verbindungsglieder umsetzen lässt, wenn die Verbindungsglieder eines Verbindungspaares derart gestaltet sind, dass sich die Verbindungsglieder im kontaktierten Zustand bei einer relativen Verdrehung zueinander über eine Teilfläche ihrer Mantelfläche bzw. ihres Umfangs aufeinander abwälzen bzw. abrollen. Dabei sind die Verbindungsglieder sowie die Kontakte derart gestaltet, dass bei der Abwälz- bzw. Abrollbewegung die elektrische und die magnetische Kontaktierung erhalten bleibt.

Eine Bewegung der Verbindungsglieder eines Verbindungspaares derart, dass diese zumindest über eine Teilfläche der aufeinander ausgerichteten Mantelflächen der Verbindungsglieder aufeinander abwälzen bzw. abrollen, lässt sich unabhängig davon realisieren, ob die Verbindung zwischen den beiden Einheiten nur in einer Orientierung geschlossen werden kann oder ob auch eine zweite, vorzugsweise um 180° versetzte Anordnung, oder noch weitere Orientierungen möglich sind. Im Rahmen der Erfindung ist vorzugsweise vorgesehen, dass die Einheiten in nur einer Orientierung oder in zwei Orientierungen miteinander verbindbar sind. Unter Orientierung ist dabei das grundsätzliche Verbinden der beiden Einheiten zu verstehen, beispielsweise ob ein Bildschirm bei der Verbindung mit einer Tastatur auf den Benutzer ausgerichtet ist oder um 180° verdreht ist und in die andere Richtung zeigt. Analog ist darunter bei der Verbindung von zwei Mobiltelefonen miteinander zu verstehen, ob die Bildschirme der Mobiltelefone bei der Verbindung, wenn diese flach nebeneinander liegen, in dieselbe Richtung zeigen oder in entgegengesetzte Richtungen. Ähnliches gilt bei der Verbindung von zwei Tablets oder beim Verbinden eines Tablets oder eines Mobiltelefons mit einer Dockingstation. Die sich aus den erfindungsgemäßen Verbindungsgliedern ergebende Verdrehbarkeit (insbesondere realisiert durch ein Abwälzen der Verbindungsglieder), die auch zu einer Verdrehbarkeit der miteinander verbundenen Einheiten führt, ist unabhängig davon gegeben, ob die Einheiten in einer, zwei oder mehreren Orientierungen miteinander verbindbar sind.

Erfindungsgemäß kann, wie bereits ausgeführt, vorgesehen sein, dass die Einheiten in mehr als einer Orientierung, insbesondere in genau zwei Orientierungen, miteinander verbindbar sind, insbesondere in zwei um 180° zueinander verschiedenen Orientierungen. Dies kann sich insbesondere für die Verbindung von Tastaturen mit Bildschirmen oder zur Verbindung von zwei Tablets oder zur Verbindung von zwei Mobiltelefonen oder zur Verbindung eines Tablets und eines Mobiltelefons mit einer weiteren elektronischen Einheit eignen.

Erfindungsgemäß kann vorgesehen sein, dass die Magnetelemente der Verbindungsglieder eines Verbindungspaares hinsichtlich ihrer Polarität derart ausgerichtet sind, dass sich die Verbindungsglieder eines Verbindungspaares nur in einer Orientierung der ersten Einheit zu der zweiten Einheit magnetisch anziehen.

Mit einer vorbestimmten Orientierung ist an dieser Stelle gemeint, dass beispielsweise bei zwei Verbindungsgliedern deren Kontakte nur in einer vorbestimmten Zuordnung zur gegenseitigen Verbindung vorgesehen sind. Insbesondere sollen die Einheiten nicht "falsch herum" miteinander verbunden werden können, wodurch z. B. ein technischer Defekt vermieden werden kann.

Erfindungsgemäß kann dabei auch vorgesehen sein, dass in alternativen Orientierungen die Magnetelemente nicht kontaktieren bzw. eine einander abstoßende Magnetkraft erfahren. Einem Benutzer kann durch die abstoßende Magnetkraft signalisiert werden, dass sich eine der Einheiten bzw. eines der Verbindungsglieder in einer falschen Orientierung befindet. Außerdem kann eine ungewollte und unbemerkte Falschkontaktierung verhindert werden wenn die Einheiten sich zueinander in Ortsnähe befinden und frei bzw. unkontrolliert beweglich sind, wie beispielsweise während eines Transportvorgangs.

Erfindungsgemäß kann vorgesehen sein, dass die Verbindungsglieder eines Verbindungspaares jeweils wenigstens zwei Magnetelemente aufweisen.

Die Verwendung von mehr als einem Magnetelement kann in vorteilhafter Weise eine magnetische Kraftwirkung (Haltekraft und Abstoßkraft) der magnetischen Verbindungsvorrichtung erhöhen. Weiter kann durch die entsprechende Wahl der Anzahl der Magnetelemente eine bestimmte Haltekraft festgelegt werden.

In einer Ausführung der Erfindung kann vorgesehen sein, dass die Ausrichtung der Pole der Magnetelemente bzw. die Verteilung der Magnetelemente selbst an den Verbindungsgliedern die vorbestimmte Orientierung oder die vorbestimmten Orientierungen vorgibt.

Eine entsprechende Verteilung der Magnetelemente bzw. deren Pole über die Verbindungsglieder der Einheiten kann als eine Art Kodierung verstanden werden, die die gewünschte Orientierung der Verbindungsglieder zueinander zur Kontaktierung festlegt. Wenn jedes Verbindungsglied eines Verbindungspaares zwei Magnetelemente aufweist, lässt sich durch die Ausrichtung der beiden Magnetelemente auf dem jeweiligen Verbindungsglied definieren, ob die Einheiten nur in einer oder in zwei Orientierungen geschlossen werden können bzw. ob nur eine Orientierung magnetisch unterstützt oder ob zwei Orientierungen magnetisch unterstützt werden.

Wenn die beiden Magnetelemente eines Verbindungsglieds symmetrisch bezogen auf die Längsachse des Verbindungsglieds um den Mittelpunkt bzw. um eine sich durch den Mittelpunkt erstreckende Querschnittsfläche des Verbindungsglieds angeordnet sind und die Magnetelemente derart ausgerichtet sind, dass jeweils der gleiche Pol nach innen bzw. der gleiche Pol der beiden Magnetelemente nach außen zeigt, dann kann ein Verbindungsglied, bei dem jeweils die Gegenpole identisch angeordnet sind, in zwei Orientierungen verbunden werden. Beispielsweise kann bei einem Verbindungsglied vorgesehen sein, dass die Nordpole der Magnetelemente jeweils nach außen und somit die Südpole nach innen ausgerichtet sind, während bei dem damit zu verbindenden anderen Verbindungsglied die Südpole nach außen und die Nordpole nach innen ausgerichtet sind.

Wenn durch die Anordnung der Magnetelemente erreicht werden soll, dass die Einheiten nur in einer Orientierung zu verbinden sind, dann kann entweder vorgesehen sein, dass die Magnetelemente auf den Verbindungsgliedern asymmetrisch zu einem Mittelpunkt (in Achsrichtung betrachtet) anordnet sind oder die Magnetelemente auf einem Verbindungsglied hinsichtlich ihrer Pole identisch ausgerichtet sind, d. h. beispielsweise zeigen jeweils die Nordpole nach links und die Südpole nach rechts. Bei einem damit zu verbindenden Verbindungsglied ist dann vorgesehen, dass jeweils die Südpole entsprechend nach links und die Nordpole entsprechend nach rechts ausgerichtet sind. Damit ist eine Verbindung der Verbindungsglieder nur in einer Ausrichtung möglich.

Erfindungsgemäß kann vorgesehen sein, dass die miteinander zu verbindenden Einheiten jeweils nur über ein Verbindungsglied verfügen. Das Verbindungsglied kann dabei ein oder zwei oder auch mehrere Magnetelemente aufweisen.

Erfindungsgemäß kann ferner vorgesehen sein, dass die miteinander zu verbindenden Einheiten jeweils über zwei oder mehrere Verbindungsglieder verfügen. Insbesondere das Vorsehen von zwei Verbindungsgliedern pro Einheit hat sich als vorteilhaft herausgestellt, da sich damit die Einheiten, beispielsweise ein Bildschirm mit einer Tastatur, besonders stabil verbinden lassen. Die Verbindungsglieder können dabei wiederum jeweils über ein Magnetelement oder über zwei oder mehrere Magnetelemente verfügen. Es hat sich als vorteilhaft herausgestellt, zwei Magnetelemente pro Verbindungsglied vorzusehen.

Eine besonders geeignete magnetische Verbindungsvorrichtung ergibt sich, wenn die zu verbindenden Einheiten jeweils zwei Verbindungsglieder mit jeweils zwei Magnetelementen aufweisen.

Die Magnetelemente der Verbindungsglieder sind vorzugsweise jeweils derart angeordnet und ausgerichtet, dass bei jedem Magnetelement beide Pole zur Herstellung der magnetischen Verbindung herangezogen werden.

Erfindungsgemäß ist vorzugsweise vorgesehen, dass die Magnetelemente der Verbindungsglieder derart ausgerichtet sind, dass die Pole der Magnetelemente nebeneinander in der Achse des Verbindungsglieds liegen, vorzugsweise derart, dass bei einem Zylinder- oder Stabmagneten die Achse des Zylinder- oder Stabmagneten in der Achse des Verbindungsglieds liegt. Dies bildet einen Unterschied zu einer bekannten flachen Anordnung von Magneten, bei denen nur entweder der Nord- oder der Südpol zur Verbindung herangezogen ist, während der jeweils andere Pol von dem zu verbindenden Bauteil abgewandt ist.

Erfindungsgemäß kann somit vorzugsweise vorgesehen sein, dass bei jedem Magnetelement sowohl der Nord- als auch der Südpol zur Herstellung der Verbindung herangezogen wird, so dass bildlich dargestellt bei jedem Magnetelement eine Nordpol- oder eine Südpolscheibe nebeneinander in der Achse des Verbindungsglieds liegen und das Magnetelement bilden.

Es kann weiter vorgesehen sein, dass wenigstens eine Teilfläche der Mantelflächen der Verbindungsglieder, auf denen die Verbindungsglieder eines Verbindungspaares aufeinander abwälzbar bzw. abrollbar sind, gekrümmt und/oder bogenförmig verläuft und/oder einen Radius aufweist. Die Verbindungsglieder können vorzugsweise eine Querschnittsfläche zumindest annährend in Form eines Kreises aufweisen. Des Weiteren hat sich auch eine Querschnittsfläche in Form eines Quadrats oder eines Rechtecks mit wenigstens einer abgerundeten Ecke bzw. wenigstens einer Ecke, die eine Kreisbogenform aufweist, als besonders geeignet herausgestellt. Dadurch wird in einfacher Weise eine gekrümmt und/oder bogenförmig verlaufende und/oder einen Radius aufweisende Teilfläche geschaffen.

Von Vorteil ist es, wenn die Teilfläche eine gleichmäßige Krümmung bzw. einen gleichmäßigen Radius aufweist, damit sich die Verbindungsglieder bei einer Verdrehung der Einheiten zueinander gleichmäßig auf der Teilfläche abwälzen können.

Durch eine gekrümmt und/oder bogenförmige und/oder einen Radius aufweisende Mantel- bzw. Oberfläche bzw. eine entsprechend gestaltete Teilfläche der Mantel- bzw. Oberfläche ist es möglich, dass die Verbindungsglieder eines Verbindungspaares sich aufeinander in abwälzender Form bewegen können, ohne die elektrische Kontaktierung zu lösen. Eine solche Abwälzbewegung ermöglicht eine einfache Realisierung der erfindungsgemäß vorgesehenen Verdrehbarkeit bzw. Bewegbarkeit der Verbindungsglieder. Eine lineare bzw. translatorische oder sonstige Bewegung bei entsprechender Ausgestaltung der Verbindungsglieder ist ebenfalls denkbar.

Eine weitere Ausführung der Erfindung kann vorsehen, dass die Verbindungsglieder eines Verbindungspaares stabförmig ausgebildet sind, wobei wenigstens eine Teilfläche des Umfangs des jeweiligen Verbindungsglieds derart ausgebildet ist, dass die Verbindungsglieder eines Verbindungspaares aufeinander abwälzbar sind.

Dabei kann insbesondere vorgesehen sein, die Magnetelemente und/oder die elektrischen Kontakte längs bzw. in Axialrichtung nebeneinander entlang der Verbindungsglieder verteilt anzuordnen.

Es kann weiter vorgesehen sein, dass die stabförmigen Verbindungsglieder an ihren jeweiligen stirnseitigen Enden ein Magnetelement aufweisen und zwischen den Magnetelementen die Mehrzahl von Kontakten angeordnet ist. Die Magnetelemente können selbstverständlich auch einen Abstand zu den stirnseitigen Enden der Verbindungsglieder aufweisen. Es kann auch vorgesehen sein, dass die Magnetelemente zwischen den Kontakten verteilt angeordnet sind.

Die Magnetelemente und die Kontakte sind derart angeordnet, dass alle Kontaktstellen bei Vorliegen einer magnetischen Verbindung geschlossen sind. Die Ausbildung von zwei Magnetelementen pro Verbindungsglied hat sich hierfür als besonders geeignet herausgestellt.

Vorzugsweise können die Kontakte und/oder die Magnetelemente wenigstens über eine Teillänge bzw. die Länge der Teilfläche in Abwälzrichtung der Verbindungsglieder gekrümmt und/oder bogenförmig verlaufen und/oder einen Radius aufweisen.

Insbesondere eine Anpassung der Krümmung bzw. des Verlaufs bzw. des Radius der Magnetelemente und Kontakte an die Krümmung bzw. den Verlauf bzw. den Radius der zum Abwälzen vorgesehenen Teilfläche der Mantelfläche der Verbindungsglieder kann die vorgesehene Bewegung der Verbindungsglieder unterstützen.

Es kann vorgesehen sein, dass die Magnetelemente zylinder- und/oder scheiben- und/oder ringförmig und/oder teilringförmig ausgebildet sind.

Derartige Magnetelemente lassen sich fertigungstechnisch günstig realisieren und eignen sich für eine axiale Anordnung insbesondere derart, dass beide Pole des Magnetelements zur Herstellung einer magnetischen Verbindung eingesetzt werden können. Zur Herstellung kann beispielsweise ein handelsüblicher Stabmagnet durch Kürzen bzw. Zuschneiden leicht in Scheibenform gebracht werden. Auch kann die Scheibe in ihrem Querschnitt anschließend - falls gewünscht - leicht in Kreissegmente zerteilt werden. Ferner kann durch eine Bohrung einfach einen Ringmagnet oder ein ringförmiges Magnetelement gebildet werden.

Bei derart gestalteten Magnetelementen bilden dann die jeweiligen Längsenden einen Pol mit jeweils gegensätzlicher Polarisierung.

In einer weiteren Ausführung kann vorgesehen sein, dass wenigstens ein Teil der aufeinander ausgerichteten, elektrisch kontaktierenden Kontakte der Verbindungsglieder eines Verbindungspaares magnetisch miteinander kontaktiert. Dazu kann wenigstens ein Teil der Kontakte als Magnetelemente ausgebildet sein.

Die Ausbildung der Kontakte als Magnetelemente kann wirtschaftlich sein und die Baugröße der magnetischen Verbindungsvorrichtung insgesamt reduzieren, da Bauteile eingespart werden. Es ist allerdings vorstellbar, dass eine Kombination von elektrischem Kontakt und Magnetelement eine Datenübertragung, insbesondere eine solche mit hoher Datenrate, störend beeinflusst. Demzufolge kann es vorgesehen sein, die elektrischen Kontakte nur teilweise als Magnetelemente auszuführen und insbesondere kritische Kontakte nicht als Magnetelemente zu realisieren. Beispielsweise können vornehmlich elektrische Kontakte die zur reinen elektrischen Versorgung, z. B. Strom- und Massekontakte, oder zur langsamen Datenübertragung verwendet werden als Magnetelemente ausgebildet werden.

Erfindungsgemäß kann auch vorgesehen sein, dass die Verbindungsglieder Magnetelemente aufweisen, die keine elektrischen Signale übertragen, und zusätzlich Magnetelemente vorgesehen sind, die zur Strom- und Masseübertragung dienen und/oder elektrische Signale übertragen. Erfindungsgemäß kann auch vorgesehen sein, dass alle Kontakte als Magnetelemente ausgebildet sind. Es ist dabei denkbar, dass bei einem Kontaktpaar das im kontaktierten Zustand eine Strom-, Signal- oder Datenübertragung ermöglicht, ein Kontakt als Permanentmagnet ausgebildet ist und der andere Kontakt lediglich magnetisch beeinflussbar ist, beispielsweise durch eine Realisierung als weichmagnetisches Material, insbesondere Eisen.

Vorzugsweise ist allerdings vorgesehen, dass die Kontakte eines Kontaktpaars entsprechend der vorbeschriebenen Magnetelemente ausgebildet sind, so dass jeder Kontakt zwei Pole aufweist, die axial nebeneinander liegen, d. h. die sich in der Verbindungsachse befindenden axialen Enden eines elektrischen Kontakts weisen jeweils einen der beiden Pole auf.

Dadurch lässt sich eine besonders starke magnetische Verbindung zwischen den Kontakten eines Kontaktpaares herstellen, die darüber hinaus kodiert sein kann. Insofern mehrere Kontakte als Magnetelemente ausgebildet sind, lässt sich ein spezifischer Code darstellen, der nur eine spezifische Verbindung mit einem entsprechend angepasst kodierten weiteren Verbindungsglied ermöglicht.

Vorzugsweise ist eine mechanische Vorführung zur Verbindung eines ersten Verbindungsglieds mit einem zweiten Verbindungsglied vorgesehen.

Erfindungsgemäß weisen die Verbindungsglieder eines Verbindungspaares eine mechanische Führung auf, die als mechanische Grobführung ausgebildet ist, um ein Verbindungspaar zu bilden.

Eine mechanische Führung unterstützt die Verbindung der zu verbindenden elektronischen Einheiten. Die mechanische Führung ist derart angeordnet, dass diese eine axiale Verschiebung der Verbindungsglieder zueinander verhindert bzw. begrenzt, wodurch die magnetische Verbindung entlastet wird und insbesondere diesbezüglich keine oder nur reduzierte Kräfte kompensieren muss.

Vorzugsweise ist die mechanische Führung derart gestaltet, dass diese eine Abwälzbewegung bzw. ein Abrollen der Verbindungsglieder aufeinander im kontaktierten Zustand nicht behindert. Dies kann beispielsweise dadurch realisiert werden, dass ein Verbindungsglied eines Verbindungspaares eine vorzugsweise bogenförmig bzw. ringförmig vorspringende Erhebung bzw. ein vorspringendes Teilringsegment aufweist und das zugeordnete zweite Verbindungsglied des Verbindungspaares eine entsprechende Vertiefung aufweist, in die die Erhebung, insbesondere die teilringförmige Erhebung, eindringen kann. Möglich ist auch nur eine punkt- oder domförmige Erhebung, die sich dann in einer teilringförmigen Vertiefung des jeweils anderen Verbindungsglieds bewegen kann, wenn die Verbindungsglieder aufeinander abwälzen.

Die mechanische Führung kann vorzugsweise zwei Aufgaben übernehmen und dabei zum einen eine mechanische Führung zum Zusammenstecken der Einheiten darstellen und zum anderen eine axiale Bewegung der Verbindungsglieder im kontaktierten Zustand verhindern. Des Weiteren kann die mechanische Führung eine mechanische Kodierung darstellen, um eine Fehlschließung zu vermeiden.

Die mechanische Führung ist als mechanische Grobführung ausgebildet, beispielsweise auch durch eine entsprechende konische Gestaltung der Erhebung, so dass die mechanische Grobführung ein einfaches Zuführen der Verbindungsglieder zueinander ermöglicht und die exakte und genaue Ausrichtung dann durch die Magnete erfolgt.

Die mechanische Grobführung kann insbesondere in Form von an einem Verbindungsglied herausragenden domartigen Gebilden und durch entsprechende Vertiefungen an dem als Gegenstück ausgebildeten Verbindungsglied realisiert sein.

Die mechanische Grobführung des Verbindungsglieds kann zusätzlich auch als Magnetelement ausgebildet sein.

Eine solche mechanische Grobführung kann dazu dienen, den Komfort für einen Benutzer weiter zu erhöhen. Die Herstellung der Verbindung wird erleichtert. Weiterhin ist eine mit einer mechanischen Grobführung versehene Magnetverbindung robust. Insbesondere im Hinblick auf die erfindungsgemäß vorgesehene Möglichkeit die Einheiten bzw. Verbindungsglieder relativ zueinander zu bewegen bzw. zu verdrehen kann die Möglichkeit eines Kontaktverlusts während dieser Bewegung verringert werden.

Erfindungsgemäß kann vorgesehen sein, dass jeweils zwei mechanische Führungselemente, vorzugsweise zwei mechanische Grobführungselemente, zumindest einen Kontakt umgeben.

Durch eine solche weiter verbesserte mechanische Führung bzw. Grobführung wird die Möglichkeit eines Kontaktierungsverlusts während einer Bewegung der Einheiten zueinander weiter gesenkt.

In einer weiteren Ausgestaltung kann vorgesehen sein, dass die elektrischen Kontakte gegenüber der Mantel- bzw. Oberfläche des Verbindungsglieds zurückversetzt angeordnet sind. Dies kann beispielsweise in Kombination mit der mechanischen Grobführung realisiert werden. Die elektrischen Kontakte können beispielsweise einzeln von elektrisch isolierenden Umrahmungselementen wenigstens teilweise umgeben und innerhalb derselben zurückversetzt angeordnet sein.

Dadurch, dass die elektrischen Kontakte auf der Mantel- bzw. Oberfläche des Verbindungsglieds zurückversetzt und somit nicht vorstehend ausgebildet sind, reduziert sich die Möglichkeit einer unbeabsichtigten Kontaktierung. Es wird außerdem vermieden, dass elektrische Kontakte eines Verbindungsglieds unbeabsichtigt miteinander kontaktieren, vor allem bei Berührung der Verbindungsglieder mit metallischen bzw. elektrisch leitfähigen Gegenständen. Somit kann ein ungewollter Kurzschluss ausgeschlossen oder zumindest die Wahrscheinlichkeit hierfür gesenkt werden.

Erfindungsgemäß kann vorgesehen sein, dass die Kontakte beider Verbindungsglieder eines Verbindungspaares gegenüber der Mantel- bzw. Oberfläche des jeweiligen Verbindungsglieds zurückversetzt sind. Dabei können die elektrischen Kontakte jeweils wenigstens teilweise von Umrahmungselementen umgeben und innerhalb derselben zurückversetzt angeordnet sein. Dabei ist vorzugsweise vorgesehen, dass die Umrahmungselemente eines Verbindungsglieds derart gestaltet sind, dass die Umrahmungselemente des anderen Verbindungsglieds in diese eindringen können, um eine elektrische Kontaktierung der jeweils innerhalb der Umrahmungselemente angeordneten elektrischen Kontakte zu ermöglichen. Durch das Eindringen der Umrahmungselemente eines Verbindungsglieds in ein entsprechendes Umrahmungsglied eines zweiten Verbindungsglieds des Verbindungspaares wird zudem eine mechanische Führung bereitgestellt, welche zuverlässig eine axiale Verschiebung der Verbindungsglieder zueinander verhindert.

In einer Ausgestaltung der Erfindung ist es vorgesehen, dass die Umrahmungselemente eines Verbindungsglieds ausgebildet sind, um die entsprechenden Umrahmungselemente des anderen Verbindungsglieds aufzunehmen. Es ist jedoch auch denkbar, dass nur ein Teil der Umrahmungselemente eines Verbindungsglieds zur Aufnahme der Umrahmungselemente des anderen Verbindungsglieds vorgesehen ist, während ein anderer Teil der Umrahmungselemente des Verbindungsglieds selbst in Umrahmungselemente des anderen Verbindungsglieds eindringt.

Ergänzend können zudem auch noch weitere mechanische Führungen an den Verbindungsgliedern vorgesehen sein, die nicht zur Umrandung der elektrischen Kontakte dienen, wie vorstehend bereits beschrieben. Des Weiteren können auch die Kontaktelemente selbst, wenigstens teilweise, als Magnete ausgebildet sein und/oder weitere Magnetelemente, die nicht zur elektrischen Kontaktierung vorgesehen sind, vorgesehen sein.

Weiterhin kann vorgesehen sein, dass die Verbindung der elektrischen Kontakte dadurch gestützt wird, dass die elektrischen Kontakte zumindest eines der Verbindungsglieder des Verbindungspaares radial gefedert gelagert sind.

Vorzugsweise ist bei jedem Kontaktpaar ein Kontakt radial vorgespannt bzw. gefedert.

Durch eine solche Lagerung kann die Verbindung der Kontakte über einen längeren mechanischen Weg in radialer Ausdehnung sichergestellt werden bzw. die Kontaktierung wird zuverlässiger. Es kann hierdurch gewährleistet werden, dass insbesondere eine elektrische Verbindung trotz Erschütterungen bzw. Vibrationen an den Einheiten bzw. den Verbindungsgliedern bestehen bleibt, da die Kontakte über eine definierte radiale Wegstrecke nachgeführt werden können. Je nach Anwendung ist selbstverständlich auch eine anderweitig gelagerte Federung oder federähnliche Vorrichtung denkbar.

Erfindungsgemäß kann auch vorgesehen sein, dass alle elektrischen Kontakte radial gefedert gelagert sind. Grundsätzlich kann eine Federung der Kontakte unabhängig davon vorgesehen sein, ob diese zusätzlich über eine magnetische Ausgestaltung verfügen bzw. als Magnete ausgebildet sind.

Die Verbindungsglieder sind vorzugsweise mit einer elektronischen Einheit oder einer Einheit, die mit einer elektronischen Einheit zu verbinden ist, verbunden oder an dieser angeordnet oder mit dieser verbindbar.

Die Anzahl der Kontakte, die ein Verbindungsglied aufweist, kann beliebig sein, vorzugsweise größer als zwei und kleiner als hundert, besonders bevorzugt zwischen fünf und fünfzig, ganz besonders bevorzugt zwischen zehn und zwanzig. In einem Ausführungsbeispiel sind dreizehn Kontakte vorgesehen. In einem weiteren Ausführungsbeispiel sind hingegen vier Kontakte vorgesehen.

Die Anzahl der Kontakte ist abhängig von den zu verbindenden Einheiten, in einer Ausgestaltung kann es auch von Vorteil sein, wenn die Anzahl der Kontakte zwei bis sechs beträgt, vorzugsweise vier Kontakte vorgesehen sind.

Die Erfindung eignet sich insbesondere für ein elektronisches System mit wenigstens einer ersten Einheit, einer magnetischen einer zweiten Einheit (11b) und Verbindungsvorrichtung nach einem der Ansprüche 1 bis 13, wobei die Einheiten über die magnetische Verbindungsvorrichtung verbunden sind.

Vorzugsweise kann ein solches System aus Einheiten wie Mobiltelefonen, Tablets oder sonstigen Computern, Gerätehüllen und Geräteschalen, Dockingstationen, Abdeckungen, Tastaturen oder Bildschirmen bestehen, wobei diese Liste nicht als abgeschlossen zu verstehen ist.

Details ergeben sich aus den Figuren der Zeichnung, wobei jede Figur für sich ein gesondertes Ausführungsbeispiel darstellt, jedoch zwei oder mehrere der Figuren in beliebiger Kombination auch ein gemeinsames Ausführungsbeispiel darstellen können. Alle Merkmale der Figuren sind optimal und können beliebig miteinander kombiniert werden.

Es zeigt schematisch:
- Figur 1: eine räumliche Ansicht eines ersten Verbindungsglieds eines Verbindungspaares in einer ersten Ausführungsform;
- Figur 1a: eine vereinfachte Darstellung der räumliche Ansicht der Figur 1;
- Figur 2: eine räumliche Ansicht eines zweiten Verbindungsglieds eines Verbindungspaares in der ersten Ausführungsform;
- Figur 2a: eine vereinfachte Darstellung der räumliche Ansicht der Figur 2;
- Figur 3: eine räumliche Ansicht eines Verbindungspaares nach den Figuren 1 und 2;
- Figur 3a: eine vereinfachte Darstellung der räumlichen Ansicht der Figur 3;
- Figur 4a: eine Seitenansicht eines Verbindungspaares mit einer Auslenkung von 0 Winkelgrad;
- Figur 4b: eine Seitenansicht eines Verbindungspaares mit einer Auslenkung von über 90 Winkelgrad;
- Figur 4c: eine Seitenansicht eines Verbindungspaares mit einer Auslenkung von 180 Winkelgrad;
- Figur 5: eine räumliche Ansicht eines ersten Verbindungsglieds eines Verbindungspaares in einer zweiten Ausführungsform;
- Figur 6: eine räumliche Ansicht eines zweiten Verbindungsglieds eines Verbindungspaares in der zweiten Ausführungsform;
- Figur 7: eine räumliche Ansicht eines Verbindungspaares nach den Figuren 5 und 6;
- Figur 8: eine Seitenansicht des Verbindungspaares nach Figur 7;
- Figur 9a: eine räumliche Ansicht der Verbindung zweier Einheiten mit zwei Verbindungspaaren bei einer Auslenkung von 0 Winkelgrad;
- Figur 9b: eine räumliche Ansicht der Verbindung zweier Einheiten mit zwei Verbindungspaaren bei einer Auslenkung von 45 Winkelgrad;
- Figur 9c: eine räumliche Ansicht der Verbindung zweier Einheiten mit zwei Verbindungspaaren bei einer Auslenkung von 90 Winkelgrad;
- Figur 9d: eine räumliche Ansicht der Verbindung zweier Einheiten mit zwei Verbindungspaaren bei einer Auslenkung von 135 Winkelgrad;
- Figur 9e: eine räumliche Ansicht der Verbindung zweier Einheiten mit zwei Verbindungspaaren bei einer Ausrichtung von 180 Winkelgrad;
- Figur 10: eine räumliche Ansicht eines ersten Verbindungsglieds eines Verbindungspaares in einer dritten Ausführungsform;
- Figur 11: eine räumliche Ansicht eines zweiten Verbindungsglieds eines Verbindungspaares in der dritten Ausführungsform;
- Figur 12: eine räumliche Ansicht eines Verbindungspaars nach den Figuren 10 und 11; und
- Figur 13: eine räumliche Ansicht der Verbindung zweier Mobiltelefone und/oder Tablets durch zwei Verbindungspaare.

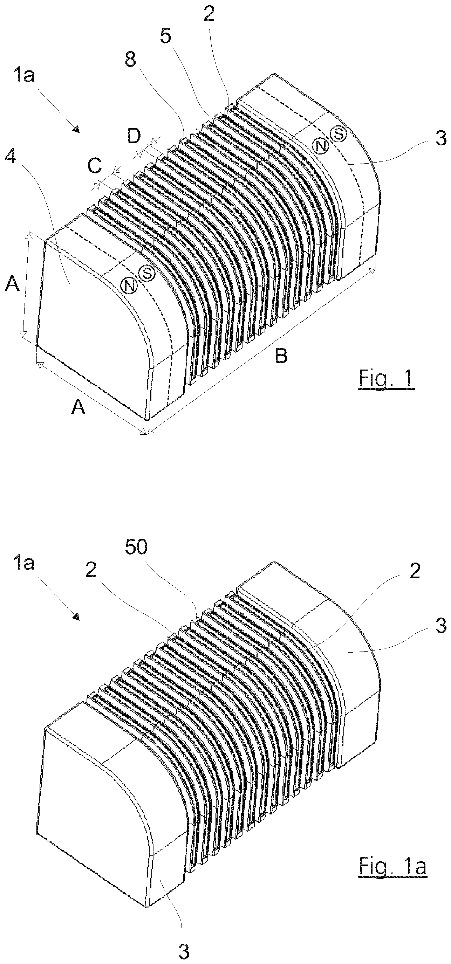

Eine mögliche Ausführungsform eines ersten Verbindungsglieds 1a ist in Figur 1 dargestellt. In dieser Ausführung werden die elektrischen Kontakte 2 von zwei Magnetelementen 3 umgeben. Die Magnetelemente 3 befinden sich an den beiden stirnseitigen Enden des Verbindungsglieds 1a. In gezeigter Ausführung weist das Verbindungsglied 1a eine Querschnittsfläche 4 in Form eines Quadrats mit einer gerundeten Ecke auf. Die Querschnittsfläche 4 ähnelt einem Kreissegment, genauer einem Viertelkreissegments.

Die Magnetelemente 3 sind als Permanentmagnete 3 ausgeführt, und können beispielsweise aus einem Zylindermagneten gefertigt sein. Die Magnetelemente 3 können somit in axialer Richtung separierte Pole N, S aufweisen. Die Anzahl der Kontakte 2 die ein Verbindungsglied 1a aufweist kann beliebig sein, vorzugsweise größer als zwei und kleiner als hundert, besonders bevorzugt zwischen zwei und fünfzig, ganz besonders bevorzugt zwischen zehn und zwanzig. Im Ausführungsbeispiel der Figur 1 sind dreizehn Kontakte 2 vorgesehen. Zwischen den Kontakten 2 sind Vertiefungen 5 vorgesehen, um eine mechanische Vorführung, vorzugsweise eine Grobführung, zu ermöglichen. Die Kontakte 2 selbst sind einzeln innerhalb elektrisch isolierter Umrahmungselemente 8 zurückversetzt angeordnet.

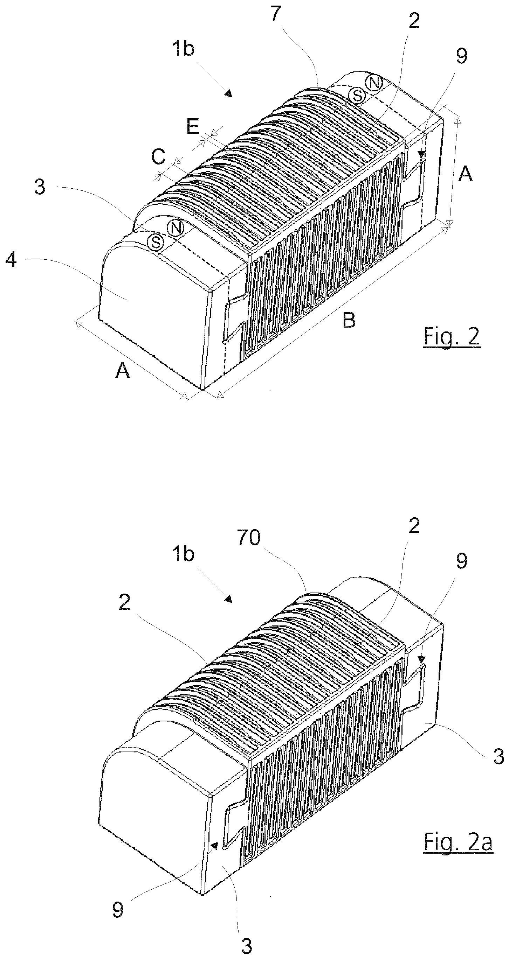

In Figur 2 ist ein zweites Verbindungsglied 1b dargestellt. Dieses Verbindungsglied 1b ist ausgebildet, um magnetisch und elektrisch mit dem ersten Verbindungsglied 1a aus Figur 1 ein Verbindungspaar 6 bilden zu können. Die dreizehn Kontakte 2 sind abermals von zwei Magnetelementen 3 umgeben, die als Permanentmagnete 3 ausgebildet sind. Die beiden Permanentmagnete 3 weisen jeweils einen Nord- und einen Südpol auf und sind an den Enden des Verbindungsglieds 1b derart angeordnet, dass ein Ende des Verbindungsglieds 1b eine Polarität N und das andere Ende des Verbindungsglieds 1b eine Polarität S aufweist. Die Verteilung der Pole N, S ist dabei komplementär zu denen der Magnetelemente 3 des ersten Verbindungsglieds 1a gewählt. Die Anordnung der Magnetelemente 3 bewirkt, dass die Magnetkraft die Kontaktierung der Verbindungsglieder 1a, 1b nur in einer Orientierung unterstützt.

Weiter gezeigt sind die Elemente zur mechanischen Vorführung, insbesondere zur Grobführung, in einer Ausführung als vorstehende, domartige Umrahmungselemente 7, derart, dass die Umrahmungselemente 7 des Verbindungsglieds 1b der Figur 2 in die entsprechend ausgebildeten Vertiefungen 5 des Verbindungsglieds 1a der Figur 1 passen, wobei hier ein gewisses Spiel vorgesehen sein kann, damit vorzugsweise eine Grobführung bereitgestellt wird. Die domartigen Umrahmungselemente 7 umfassen jeweils einen elektrischen Kontakt 2 des zweiten Verbindungsglieds 1b der Figur 2. Die elektrischen Kontakte 2 sind dabei leicht zurückversetzt und vorzugsweise durch Federelemente gelagert.

Die domartigen Umrahmungselemente 7 sind derart gestaltet, dass diese in die Vertiefungen 5 des Verbindungsglieds 1a eindringen und dabei die Umrahmungselemente 8 der Kontakte 2 des Verbindungsglieds 1a umfassen.

Eine mögliche Montage der Magnetelemente 3 an den Verbindungsgliedern 1a, 1b bzw. dem Kontaktteil der Verbindungsglieder 1a, 1b ist in Ausführung einer Schwalbenschwanzverbindung 9 gezeigt. Hierbei kann auch eine andere Verbindung bzw. Befestigung vorgesehen sein.

Den Verbindungsgliedern 1a, 1b der Figuren 1 und 2 sind beispielhaft den Maßangaben A-E zu entnehmen. Obwohl die Größenverhältnisse der Komponenten zueinander hierdurch nicht beschränkt zu verstehen und alle Maße beliebig skalierbar sind, sind im Folgenden einige besonders vorteilhafte Abmessungen genannt. Die Höhe bzw. Breite A der Querschnittsfläche 4 bzw. der Stirnseite des Verbindungsglieds 1a kann ungefähr 8 mm betragen. Die Höhe bzw. Breite der Querschnittsfläche 4 bzw. der Stirnseite des Verbindungsglieds 1b inklusive der in der Höhe und in der Breite überstehenden domartigen Umrahmungselemente 7 beträgt ebenfalls ca. 8 mm. Das heißt, die Magnetelemente 3 des zweiten Verbindungsglieds 1b weisen eine um den Überstand der domartigen Umrahmungselemente 7 geringere Höhe bzw. Breite auf wie die Magnetelemente 3 des ersten Verbindungsglieds 1a.

Die Länge B der Verbindungsglieder 1a, 1b kann ca. 20 mm betragen. Der Abstand C zwischen den Mittellinien zweier Kontakte 2 kann ca. 1,05 mm betragen. Die Breite D eines Kontakts 2, der in dem elektrisch isolierenden Umrahmungselement 8 leicht zurückversetzt angeordnet sein kann, beträgt vorzugsweise ca. 0,3 mm. Die Breite E des elektrischen Kontakts 2 des zweiten Verbindungsglieds 1b, das vorzugsweise radial gefedert gelagert und von dem domartigen Umrahmungselement 7 umgeben ist, kann beispielsweise ca. 0,2 mm betragen.

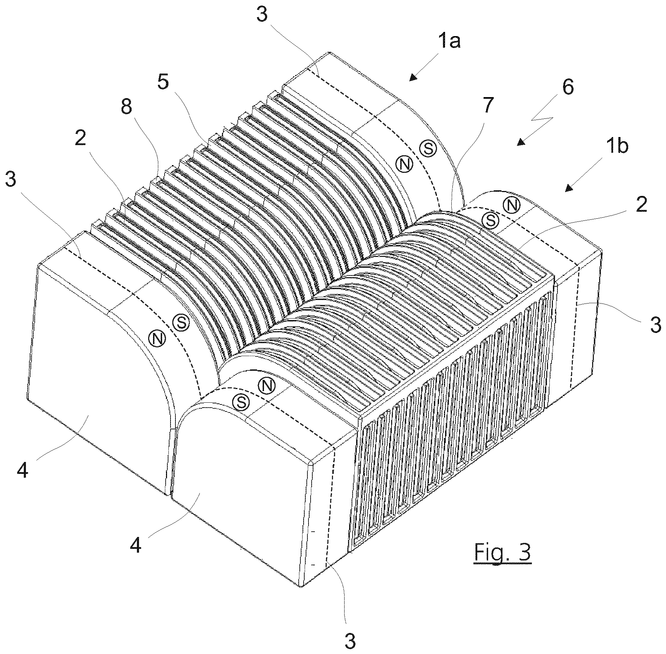

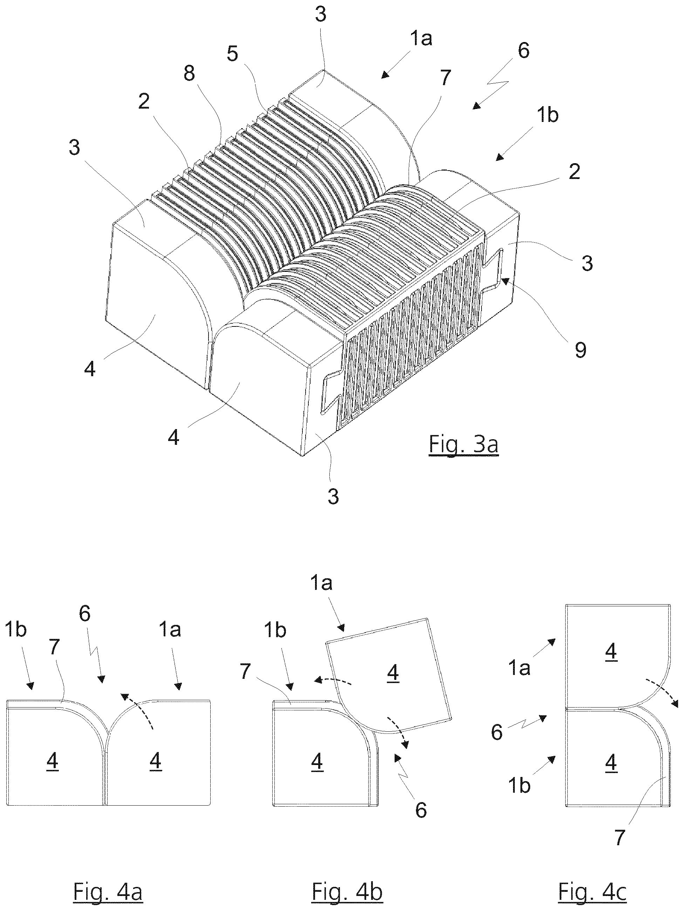

In Figur 3 ist dargestellt, wie die Verbindungsglieder 1a, 1b der Figuren 1 und 2 ein Verbindungspaar 6 ausbilden. Dabei ist die Schwalbenschwanzverbindung 9 zur Anbringung der Magnetelemente 3 an den Verbindungsgliedern 1a, 1b nicht gezeigt, diese kann beliebig sein. Eine mögliche Realisierung kann beispielsweise auch durch Kleben erfolgen. Die Verbindungsglieder 1a, 1b sind magnetisch sowie elektrisch miteinander verbunden. Zusätzlich ist eine mechanische Vorführung, im Ausführungsbeispiel eine Grobführung, vorgesehen, welche die Verbindungsglieder 1a, 1b allerdings nicht zusammenhält, sondern nur eine Führungsfunktion übernimmt und eine axiale Bewegung verhindert. Durch die mechanische Grobführung können die Verbindungsglieder 1a, 1b zunächst grob angenähert werden, wodurch die Magnetelemente 3 bei richtiger Orientierung, die in Figur 3 dargestellt ist, die endgültige Kontaktierung exakt vornehmen. Die Kodierung der Verbindungsglieder 1a, 1b mithilfe der Magnetpole N, S der Magnetelemente 3 stellt sicher, dass die Verbindungsglieder 1a, 1b nur in einer vorbestimmten Orientierung kontaktieren und dann zueinander verdrehbar sind bzw. aufeinander abwälzen können.

Die magnetische und die elektrische Verbindung zwischen den Verbindungsgliedern 1a, 1b eines Verbindungspaars erfolgt über deren Mantelfläche bzw. eine Teilfläche der Mantelfläche. Dies ist in allen Ausführungsbeispielen entsprechend dargestellt. Während sich die Verbindungsglieder 1a, 1b aufeinander abwälzen, verlaufen die Achsen der Verbindungsglieder 1a, 1b vorzugsweise weiterhin parallel zueinander.

Die Figuren 1a und 2a zeigen vereinfachte Ansichten der Darstellungen aus den Figuren 1 und 2, wobei die Maßangaben und die magnetischen Pole N, S nicht dargestellt sind. Die Magnetelemente 3 weisen jeweils zwei Pole N, S auf. In Figur 3a ist eine vereinfachte Ansicht der Verbindung der Verbindungsglieder der Figuren 1a und 2a dargestellt, wobei die Befestigung der Magnetelemente 3 mittels einer - dort dargestellten - Schwalbenschwanzverbindung 9 erfolgen kann.

Das Verbindungsglied 1a gemäß den Figuren 1 und 1a weist vorzugsweise ein Gehäuse 50, vorzugsweise aus Kunststoff, auf, welches die Umrahmungselemente 8 ausbildet. Das Gehäuse 50 ist in Figur 1a bezeichnet. Das Verbindungsglied 1b gemäß den Figuren 2 und 2a weist vorzugsweise ein Gehäuse 70, vorzugsweise aus Kunststoff, auf, welches in Figur 2a bezeichnet ist. Das Gehäuse 70 bildet dabei vorzugsweise die domartigen Umrahmungselemente 7 aus.

Die Figur 4a zeigt die Seitenansicht eines Verbindungspaares 6. Aufgrund der dargestellten Querschnittsflächen 4 der Verbindungsglieder 1a, 1b ist es möglich, diese in Form einer Kreisbewegung aufeinander abzuwälzen. Der Verlauf einer solchen Bewegung ist in den folgenden Figuren 4b und 4c angedeutet. Die Figur 4a zeigt dabei eine Ausrichtung von null Winkelgrad der Verbindungsglieder 1a, 1b relativ zueinander, die Figur 4b eine Ausrichtung von mehr als neunzig Winkelgrad und die Figur 4c eine Ausrichtung von einhundertachtzig Winkelgrad nach Vollziehen der vollständigen Abwälzbewegung.

Selbstverständlich ist die Bewegung reversibel und beliebig oft wiederholbar. Die Verdrehung kann an einer beliebigen Winkelstellung auch dauerhaft gestoppt werden. Erfindungsgemäß geht dabei die magnetische oder elektrische Kontaktierung nicht verloren.

Die Achsen der Verbindungsglieder 1a, 1b bleiben, während sich die Verbindungsglieder 1a, 1b aufeinander abwälzen, parallel zueinander ausgerichtet.

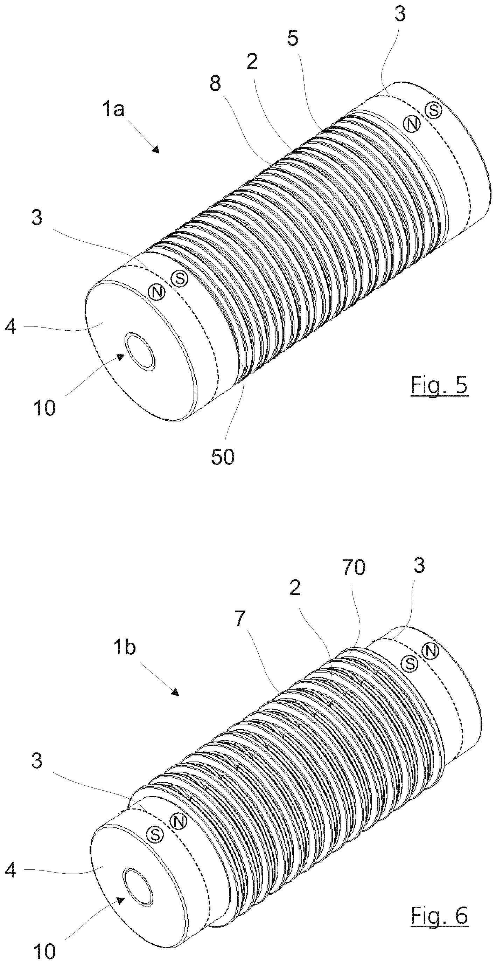

Eine zweite Ausführungsform zeigen die Figuren 5, 6 und 7. Auch in diesem Beispiel sind die Kontakte 2 von den Magnetelementen 3 umgeben. Die Magnetelemente 3 sind an den stirnseitigen Enden der Verbindungsglieder 1a, 1b angeordnet. Die Verbindungsglieder 1a, 1b weisen nun allerdings eine Querschnittsfläche 4 in Form eines vollständigen Kreises auf. Die Anbringung der Magnetelemente 3 an den Kontaktteilen der Verbindungsglieder 1a, 1b ist durch eine Verbindung bzw. Befestigung 10 realisiert, welche als runde Steckverbindung 10 ausgeführt sein kann. Abermals ist eine mechanische Vorführung, vorzugsweise eine Grobführung, vorhanden, bei der die Kontakte 2 des ersten Verbindungsglieds 1a von entsprechenden Vertiefungen 5 umgeben sind. Das in Figur 6 gezeigte zweite Verbindungsglied 1b weist domartige Umrahmungselemente 7 in Form von Kreisflächen mit größeren Radien als die Querschnittsfläche 4 auf. Um die Verbindung nur in einer vorbestimmten Orientierung zu ermöglichen, sind Magnetelemente 3 entsprechend den Figuren 1 und 2 angeordnet. Passgenau zu den Kontakten 2 des Verbindungsglieds 1a der Figur 5 sind in der Figur 6 entsprechende Kontakte 2 verteilt und vorzugsweise gefedert.

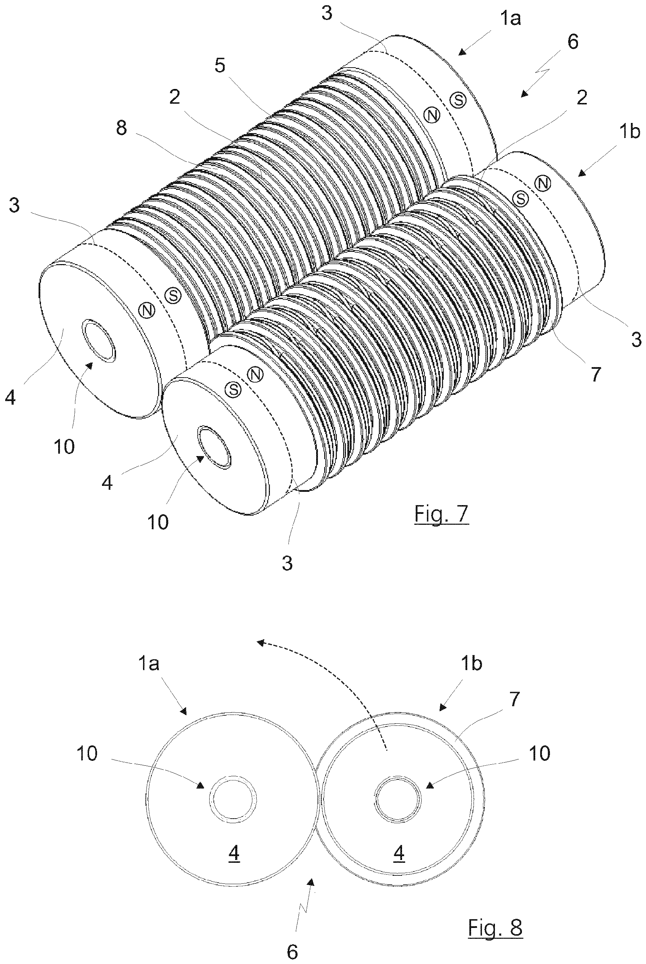

Ein resultierendes Verbindungspaar 6 ist räumlich in der Figur 7 dargestellt; die Figur 8 zeigt eine Seitenansicht. In Erweiterung der Ausführungsbeispiele nach den Figuren 1 bis 4 ist es bei dem Verbindungspaar nach Figur 7 durch den vollständigen Kreisquerschnitt möglich, die Verbindungsglieder 1a, 1b vollständig, d. h. um bis zu dreihundertsechzig Winkelgrad und darüber hinaus, aufeinander abzuwälzen.

Vorzugsweise ist auch bei dem Ausführungsbeispiel gemäß den Figuren 5 bis 8 vorgesehen, dass die Verbindungsglieder 1a und 1b nur über 180 Winkelgrad aufeinander abwälzen bzw. abrollen, dies vereinfacht es, die Kontakte 2 der Verbindungsglieder 1a, 1b an weiterführende Einheiten anzuschließen.

Die Kontakte 2 des Verbindungsglieds 1a sind von Umrahmungselementen 8 wenigstens teilweise umgeben. Die Umrahmungselemente 8 werden dabei von den domartigen Umrahmungselementen 7 des Verbindungsglieds 1b umfasst, wenn die domartigen Umrahmungselemente 7 in die Vertiefungen 5 eindringen. Vorzugsweise ist wenigstens ein Kontakt 2 jedes Kontaktpaares gefedert, grundsätzlich können auch beide Kontakte eines Kontaktpaares 2 gefedert ausgebildet sein.

Das Verbindungsglied 1a weist vorzugsweise ein Gehäuse 50, vorzugsweise aus Kunststoff, auf, welches die Umrahmungselemente 8 ausbildet. Das Verbindungsglied 1b weist vorzugsweise ein Gehäuse 70, vorzugsweise aus Kunststoff, auf, welches die domartigen Umrahmungselemente 7 ausbildet.

In den Figuren 5 bis 7 ist eine Anordnung der beiden Magnetelemente 3 derart gezeigt, dass das erste Verbindungsglied 1a an einem stirnseitigen Ende einen Nordpol und an dem anderen stirnseitigen Ende einen Südpol aufweist. Das zweite Verbindungsglied 1b weist entsprechend komplementär an einem Ende einen Südpol und an dem anderen Ende einen Nordpol auf. Dadurch wird erreicht, dass die Verbindungsglieder 1a, 1b magnetisch unterstützt nur in einer Orientierung geschlossen werden können. Insofern die Magnetelemente 3 derart angeordnet sind, dass das erste Verbindungsglied 1a an beiden stirnseitigen Enden einen Südpol oder einen Nordpol aufweist und das zweite Verbindungsglied 1b entsprechend komplementär gestaltet ist, ist in diesem Fall eine Verbindung der Verbindungsglieder 1a, 1b in zwei Orientierungen, die um 180 Winkelgrad zueinander verdreht sind, möglich. Dies kann für bestimmte Ausführungsformen geeignet sein.

Die Verbindungsglieder 1a, 1b sind vorzugsweise mit einer elektronischen Einheit 11a, 11b verbunden oder an dieser angeordnet oder mit dieser verbindbar.

Vorzugsweise können durch wenigstens ein Verbindungspaar 6 die nachfolgenden Einheiten 11a, 11b verbunden werden:
(A) zwei Tablets,
(B) zwei Mobiltelefone,
(C) ein Tablet und/oder ein Mobiltelefon und/oder eine elektronische Einheit
(D) ein Tablet oder ein Mobiltelefon oder eine elektronische Einheit mit einer Tastatur und/oder einem Bildschirm oder einer weiteren elektronischen Einheit.

Vorzugsweise können auch ein Mobiltelefon, ein Tablet oder eine elektronische Einheit mit einer Schale, einer Dockingstation, einem Gehäuse, einer Abdeckung, einem Sockel oder einem Aufnahmeteil verbunden werden.

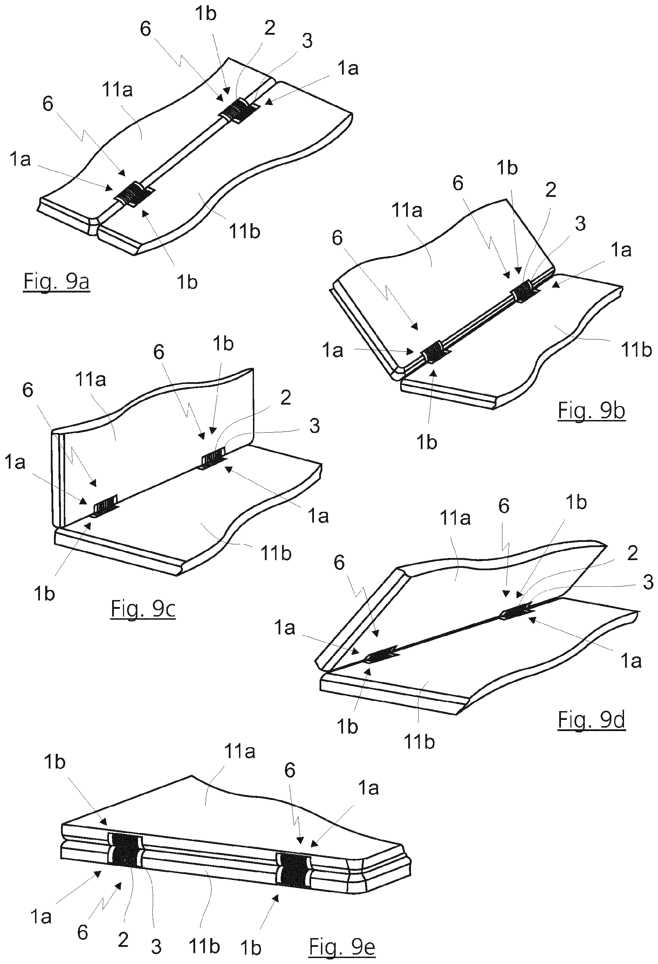

Die Figuren 9a bis 9e zeigen eine beispielhafte Anwendung der Erfindung. Gezeigt sind zwei Einheiten 11a, 11b, die vorzugsweise jeweils zwei Verbindungsglieder 1a, 1b aufweisen. Die Verbindungsglieder 1a, 1b weisen vorzugsweise zwei Magnetelemente 3, die vorzugsweise stirnseitig an den Verbindungsgliedern 1a, 1b angeordnet sind, auf. Die erste Einheit 11a weist dabei jeweils ein erstes Verbindungsglied 1a und ein zweites Verbindungsglied 1b auf; die zweite Einheit 11b ist komplementär dazu aufgebaut.

Insgesamt werden zwei Verbindungspaare 6 gebildet. Die dargestellten Verbindungsglieder 1a, 1b sind vorzugsweise die des ersten Ausführungsbeispiels, d. h. es liegt ein Querschnitt 4 in Form eines an einem Ende abgerundeten Quadrats vor. Es kann sich aber auch um die Verbindungsglieder 1a, 1b des zweiten oder dritten Ausführungsbeispiels handeln.

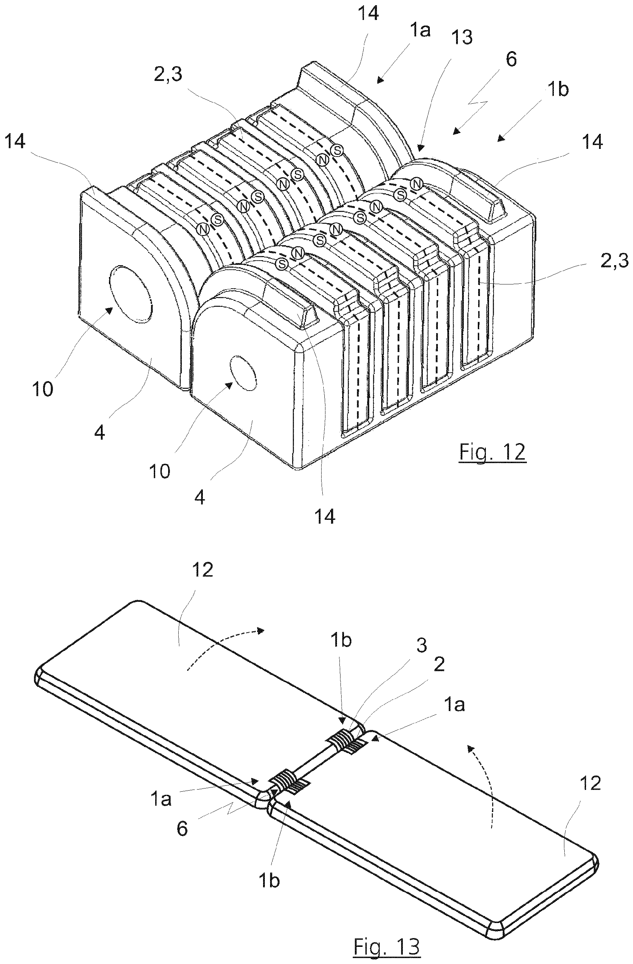

Bei den dargestellten Einheiten 11a, 11b kann es sich um identische Einheiten oder aber um unterschiedliche Einheiten handeln. So kann eine Verbindung beispielsweise zwischen zwei gleichen oder aber unterschiedlichen Mobiltelefonen, einem mobilen Computer und einer Tastatur oder Dockingstation oder ähnlichem hergestellt werden. Die Figur 13 zeigt eine Verbindung zwischen zwei identischen Mobiltelefonen 12 oder Tablets.

Durch die erfindungsgemäße Verbindungsvorrichtung ist die Verbindung beider Einheiten 11a, 11b in vorteilhafter Weise flexibel. Die Einheiten 11a, 11b sind relativ zueinander verdrehbar bzw. nach Art eines Scharniers bzw. Gelenks zueinander verschwenkbar. Eine mögliche Drehbewegung ist in ihrem Ablauf beginnend in Figur 9a und endend bei Figur 9e dargestellt. Bei einer Querschnittsfläche 4 gemäß der ersten Ausführungsform der Verbindungsglieder 1a, 1b ist dabei - wie dargestellt - eine Verdrehung um bis zu einhundertachtzig Winkelgrad der Elemente 11a, 11b relativ zueinander möglich.

Die Anzahl der Verbindungsglieder 1a, 1b bei den Einheiten 11a, 11b kann beliebig sein. Es ist auch möglich, nur ein Verbindungsglied 1a bzw. 1b pro Einheit zu verwenden oder auch mehr als zwei Verbindungsglieder 1a, 1b. Durch eine entsprechende Anordnung der Verbindungsglieder 1a, 1b, vorzugsweise symmetrisch oder gegebenenfalls auch asymmetrisch, und eine entsprechende Anordnung der Magnetelemente 3 auf den Verbindungsgliedern 1a, 1b kann erreicht werden, dass die magnetische Verbindungsvorrichtung nur die Verbindung der Einheiten 11a, 11b in einer Orientierung unterstützt oder eine Verbindung auch in zwei Orientierungen (um 180 Winkelgrad zueinander verdreht) möglich ist, so dass die Ausrichtung der Einheiten 11a, 11b variiert werden kann, wobei in beiden Fällen eine Verdrehung der Einheiten 11a, 11b zueinander (wie in den Figuren 9a bis 9e dargestellt) möglich ist.

Die Einheit 11a kann über Verbindungsglieder 1a oder Verbindungsglieder 1b oder über eine Mischung, wie vorstehend bereits beschrieben, der Verbindungsglieder 1a, 1b verfügen. Die Einheit 11b kann entsprechend komplementär ausgerüstet sein.

Insbesondere zur Verbindung zweier baugleicher Einheiten ist es von Vorteil, wenn jede Einheit ein Verbindungsglied 1a und ein Verbindungsglied 1b aufweist, so dass die Einheiten zusammengeschlossen werden können.

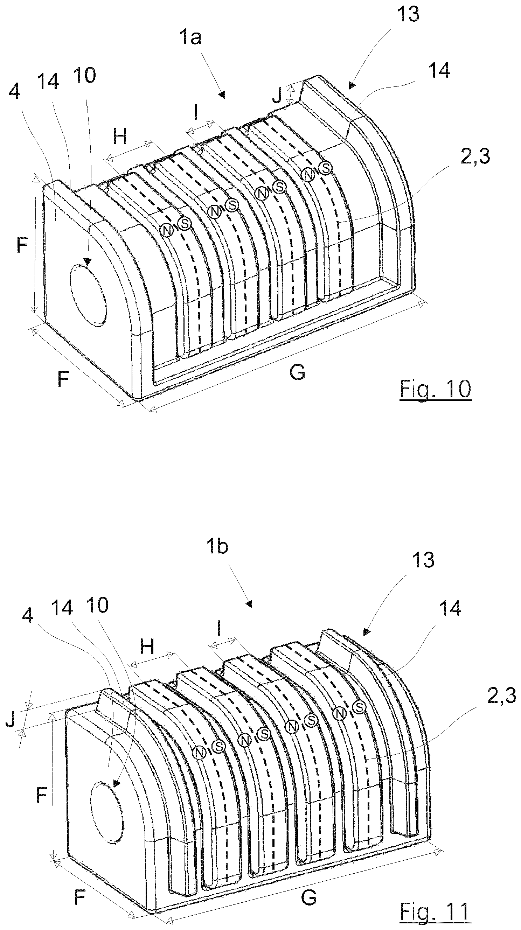

Die Figur 10 zeigt eine dritte Ausführung für ein erstes Verbindungsglied 1a. In diesem Beispiel wird abermals eine Querschnittsfläche 4 in Form eines Quadrats mit einer abgerundeten Ecke verwendet. Gezeigt ist die Möglichkeit, die Kontakte 2 als Magnetelemente 3 auszubilden. Hierbei sind die Kontakt- bzw. Magnetelemente 2, 3 von einer mechanischen Vorführung, vorzugsweise einer Grobführung 13, umgeben, die zudem als Rahmen zum gleichzeitigen Schutz aller Kontakte 2 vor Kurzschlüssen dienen kann. Gezeigt ist eine Ausführung mit vier Kontakten 2. Diese Ausführung eignet sich insbesondere zur Bildung einer USB-Steckverbindung.

Das Gegenstück zu dem in Figur 10 gezeigten, ersten Verbindungsglied 1a, das zweite Verbindungsglied 1b, ist in Figur 11 dargestellt. Das zweite Verbindungsglied 1b ist dabei so ausgebildet, dass dessen mechanische und magnetische Führung komplementär zu der des ersten Verbindungsglieds 1a ist.

Wie sich aus den Figuren 10 bis 12 ergibt, sind die Kontakte 2 bzw. Magnetelemente 3 auf den jeweiligen Verbindungsgliedern 1a, 1b jeweils gleichermaßen orientiert derart, dass sich die Nord- bzw. Südpole aller Magnetelemente 3 eines Verbindungsglieds 1a bzw. 1b auf derselben Seite befinden. Hier sind auch andere Gestaltungen möglich, um eine anderweitige Kodierung zu erreichen. Möglich ist es zudem, dass im Ausführungsbeispiel gemäß den Figuren 10 bis 12 nicht alle Kontakte 2 magnetisch ausgebildet sind. Es kann insbesondere von Vorteil sein, wenn nur die Strom- oder Massekontakte magnetisch ausgebildet sind, um Störungen zu vermeiden. Darüber hinaus können gegebenenfalls auch noch weitere Daten- oder Signalkontakte, insbesondere wenn eine langsame Datenübertragung vorgesehen und eine Störung weniger wahrscheinlich ist, magnetisch ausgebildet sein. Zusätzlich können, wie in den ersten und zweiten Ausführungsformen der Verbindungsglieder 1a, 1b dargestellt, auch noch weitere Magnetelemente 3, die nicht zur elektrischen Kontaktierung vorgesehen sind, in dem Ausführungsbeispiel nach den Figuren 10 bis 12 ergänzt werden.

Wie sich aus den Figuren 10 bis 12 ferner ergibt, ist die mechanische Grobführung 13 zur Vorpositionierung bzw. zur Grobpositionierung dazu vorgesehen, eine axiale Bewegung der Verbindungsglieder 1a, 1b zueinander zu vermeiden. Die axiale Positionierung kann somit in einfacher Weise durch die mechanische Grobführung übernommen werden, während die Haltekraft zwischen den Verbindungsgliedern 1a, 1b, insbesondere in radialer Richtung, durch die Magnetkraft übernommen wird. Die Elemente der Verbindungsglieder 1a, 1b, welche die mechanische Grobführung 13 bilden, sind als teilringförmige Erhöhungen 14 ausgebildet. Die teilringförmigen Erhöhungen 14 folgen hinsichtlich ihrer Kontur im Wesentlichen dem gebogenen Verlauf der Mantel- bzw. Oberfläche der Verbindungsglieder 1a, 1b, d. h. diese weisen einen bogenförmigen Verlauf (teilringförmig) auf, der an den Enden in eine Gerade ausläuft. Die beiden teilringförmigen Erhöhungen 14 des ersten Verbindungsglieds 1a sind an den stirnseitigen Enden des Verbindungsglieds ausgebildet. Die beiden teilringförmigen Erhöhungen 14 des zweiten Verbindungsglieds 1b sind in etwa um die Stärke der teilringförmigen Erhöhungen 14 des ersten Verbindungsglieds 1a von den Stirnseiten nach innen gerückt, so dass die teilringförmigen Erhöhungen 14 der beiden Verbindungsglieder 1a, 1b seitlich aneinander liegen, wenn die Verbindungsglieder 1a, 1b elektrisch und magnetisch miteinander verbunden sind. Die Ausbildung von zwei derartigen mechanischen Verbindungspaaren verhindert eine Verschiebung der Verbindungsglieder 1a, 1b in beide axiale Bewegungsrichtungen.

Obwohl es dem Fachmann ohne Weiteres möglich ist, die Verbindungsglieder 1a, 1b und die Größen derer Bestandteile beliebig zu variieren, sind im Folgenden einige besonders vorteilhafte Maßangaben genannt. Die Höhe und Breite F der Querschnittsfläche 4 des ersten Verbindungsglieds 1a kann beispielsweise ca. 7,5 mm betragen. Die Höhe und Breite F der Querschnittsfläche 4 des zweiten Verbindungsglieds 1b beträgt ebenfalls ca. 7,5 mm. Die Länge G eines Verbindungsglieds 1a, 1b kann ungefähr 15 mm betragen. Der Abstand H zwischen der Mittellinie zweier Kontakte 2 bzw. Magnetelemente 3 kann etwa 2,5 mm betragen. Die Breite I eines Kontakts 2 bzw. Magnetelements 3 kann ungefähr 1,5 mm betragen. Der Überstand J um den die teilringförmige Erhebung 14 über die Mantelfläche vorsteht, kann vorzugsweise ca. 1 mm betragen. Der Abstand ist dabei derart gewählt, dass, wenn die beiden Verbindungsglieder 1a, 1b zusammengesteckt sind, die Kontakte 2 der Verbindungsglieder 1a, 1b miteinander kontaktieren. Dies wird durch eine magnetische Ausgestaltung der Kontakte 2 unterstützt. Ferner kann vorgesehen sein, dass einer oder beide Kontakte 2 eines Kontaktpaares 2 radial gefedert gelagert sind.

In den Figuren 1, 2, 10 und 11 sind die Maßangaben besonders vorteilhaft, hierauf sind die Ausführungen jedoch nicht beschränkt. Die Maßangaben können insbesondere +/- 80%, vorzugsweise +/- 50 % und ganz besonders bevorzugt +/- 20% differieren.

In Figur 12 ist die Bildung eines Verbindungspaares 6 der Verbindungsglieder 1a, 1b der dritten Ausführungsform der Figuren 10 und 11 beispielhaft dargestellt.

Die in den Figuren 9a bis 9e dargestellten Einheiten 11a, 11b können auch mit den Verbindungsgliedern 1a, 1b der dritten Ausführungsform, insbesondere auch mit der dort gewählten Anzahl an Kontakten 2, ausgerüstet sein.

In Figur 13 ist dargestellt, wie eine Verbindung zweier Mobiltelefone 12 oder zweier Tablets durch zwei Verbindungspaare 6 aussehen kann. Gezeigt ist eine Ausführung, bei der die Verbindungsglieder 1a, 1b einen Querschnitt 4 nach der ersten oder der dritten Ausführungsform der Verbindungsglieder 1a, 1b aufweisen, und wobei jeweils vier Kontakte 2 von stirnseitig angeordneten Magnetelementen 3 umgeben sind. Erfindungsgemäß ist es möglich, die Mobiltelefone 12 in Pfeilrichtung aufeinander zu zu bewegen. Es liegt somit eine gelenkige, bzw. drehbare Verbindung vor. Insbesondere wäre es vorstellbar, die Mobiltelefone 12 elektronisch derart zu koppeln, dass die Anzeigefläche eines Mobiltelefons 12 auf die Anzeigefläche bzw. das Display des zweiten Mobiltelefons 12 erweiterbar ist. Beispielsweise wäre es dann möglich, die Mobiltelefone 12 derart zusammen zu klappen, dass diese rückseitig aneinander liegen, wobei die jeweiligen Displays der Mobiltelefone 12 nach außen zeigen. Insbesondere würde dadurch ein Anzeigegerät geschaffen, das ein beidseitiges Display aufweist.

## Patentansprüche

1. Magnetische Verbindungsvorrichtung zur Verbindung von zwei Einheiten, wobei einer ersten Einheit (11a) wenigstens ein erstes Verbindungsglied (1a) und einer zweiten Einheit (11b) wenigstens ein zweites Verbindungsglied (1b) zugeordnet ist, wobei ein erstes Verbindungsglied (1a) und ein zweites Verbindungsglied (1b) ein Verbindungspaar (6) bilden, wobei die Verbindungsglieder (1a, 1b) eines Verbindungspaares (6) jeweils eine Mehrzahl von Kontakten (2) aufweisen, wobei die Verbindungsglieder (1a, 1b) eines Verbindungspaares (6) zueinander achsparallel angeordnet sind und magnetisch miteinander kontaktieren und wobei die Verbindungsglieder (1a, 1b) eines Verbindungspaares (6) im kontaktierten Zustand relativ zueinander verdrehbar sind,
**dadurch gekennzeichnet, dass**
die Verbindungsglieder (1a, 1b) eines Verbindungspaares (6) eine mechanische Führung (5,7 bzw. 13) aufweisen, die ausgebildet ist, um eine axiale Bewegung der Verbindungsglieder (1a, 1b) im kontaktierten Zustand zu begrenzen, und wobei die mechanische Führung (5, 7 bzw. 13) als mechanische Grobführung ausgebildet ist, so dass die mechanische Grobführung ein einfaches Zuführen der Verbindungsglieder zueinander ermöglicht und die exakte und genaue Ausrichtung dann magnetisch erfolgt.

2. Magnetische Verbindungsvorrichtung nach Anspruch 1,
**dadurch gekennzeichnet, dass**
die Verbindungsglieder (1a, 1b) eines Verbindungspaares (6) jeweils wenigstens ein Magnetelement (3) zur magnetischen Kontaktierung umfassen und wenigstens ein Magnetelement (3) eines Verbindungspaares (6) als Permanentmagnet ausgebildet ist.

3. Magnetische Verbindungsvorrichtung nach Anspruch 2,
**dadurch gekennzeichnet, dass**
die Verbindungsglieder (1a, 1b), die Magnetelemente (3) und die Kontakte (2) eines Verbindungspaares (6) derart ausgebildet sind, dass im Falle einer magnetischen Kontaktierung die Kontakte (2) der jeweiligen Verbindungsglieder (1a, 1b) elektrisch miteinander kontaktieren.

4. Magnetische Verbindungsvorrichtung nach Anspruch 2, oder 3,
**dadurch gekennzeichnet, dass**
die Magnetelemente (3) derart ausgebildet sind, dass die Verbindungsglieder (1a, 1b) eines Verbindungspaares (6) in wenigstens einer vorbestimmten Orientierung elektrisch und magnetisch kontaktierbar sind und sich in dieser Orientierung magnetisch anziehen, wobei die Verbindungsglieder (1a, 1b) eines Verbindungspaares (6) derart gestaltet sind, dass sich die Verbindungsglieder (1a, 1b) eines Verbindungspaares (6) im kontaktierten Zustand bei einer relativen Verdrehung zueinander zumindest über eine Teilfläche der Mantelfläche der Verbindungsglieder (1a, 1b) aufeinander abwälzen lassen, wobei die elektrische und magnetische Kontaktierung bestehen bleibt.

5. Magnetische Verbindungsvorrichtung nach einem der Ansprüche 2 bis 4,
**dadurch gekennzeichnet, dass**
die Magnetelemente (3) der Verbindungsglieder (1a, 1b) eines Verbindungspaares (6) hinsichtlich ihrer Polarität derart ausgerichtet sind, dass sich die Verbindungsglieder (1a, 1b) eines Verbindungspaares (6) nur in einer Orientierung der ersten Einheit (11a) zu der zweiten Einheit (11b) magnetisch anziehen.

6. Magnetische Verbindungsvorrichtung nach einem der Ansprüche 2 bis 5,
**dadurch gekennzeichnet, dass**
die Verbindungsglieder (1a, 1b) eines Verbindungspaares (6) jeweils wenigstens zwei Magnetelemente (3) aufweisen.

7. Magnetische Verbindungsvorrichtung nach einem der Ansprüche 4 bis 6,
**dadurch gekennzeichnet, dass**
wenigstens eine Teilfläche der Mantelflächen der Verbindungsglieder (1a, 1b), auf denen die Verbindungsglieder (1a, 1b) eines Verbindungspaares (6) aufeinander abwälzbar sind, gekrümmt und/oder bogenförmig verläuft und/oder einen Radius aufweist.

8. Magnetische Verbindungsvorrichtung nach Anspruch 7,
**dadurch gekennzeichnet, dass**
die Verbindungsglieder (1a, 1b) eines Verbindungspaares (6) stabförmig ausgebildet sind.

9. Magnetische Verbindungsvorrichtung nach Anspruch 8,
**dadurch gekennzeichnet, dass**
die stabförmigen Verbindungsglieder (1a, 1b) an ihren jeweiligen stirnseitigen Enden ein Magnetelement (3) aufweisen und zwischen den Magnetelementen (3) die Mehrzahl von Kontakten (2) angeordnet ist.

10. Magnetische Verbindungsvorrichtung nach einem der Ansprüche 4 bis 9,
**dadurch gekennzeichnet, dass**
die Kontakte (2) und/oder die Magnetelemente (3) wenigstens über die Länge der Teilfläche in Abwälzrichtung der Verbindungsglieder (1a, 1b) gekrümmt und/oder bogenförmig verlaufen und/oder einen Radius aufweisen.

11. Magnetische Verbindungsvorrichtung nach einem der Ansprüche 2 bis 10,
**dadurch gekennzeichnet, dass**
die Magnetelemente (3) zylinder- und /oder scheiben- und/oder ringförmig und/oder teilringförmig ausgebildet sind.

12. Magnetische Verbindungsvorrichtung nach einem der Ansprüche 1 bis 11,
**dadurch gekennzeichnet, dass**
wenigstens ein Teil der aufeinander ausgerichteten, elektrisch kontaktierenden Kontakte (2) der Verbindungsglieder (1a, 1b) eines Verbindungspaares (6) magnetisch miteinander kontaktiert.

13. Magnetische Verbindungsvorrichtung nach Anspruch 12,
**dadurch gekennzeichnet, dass**
wenigstens ein Teil der Kontakte (2) als Magnetelemente (3) ausgebildet ist.

14. Elektronisches System mit wenigstens einer ersten Einheit (11a), einer zweiten Einheit (11b) und einer magnetischen e Verbindungsvorrichtung nach einem der Ansprüche 1 bis 13,
**dadurch gekennzeichnet, dass**
die Einheiten (11a, 11b) über die magnetische Verbindungsvorrichtung verbunden sind.

## Claims

1. Magnetic connection apparatus for connecting two units, wherein at least one first connection member (1a) is associated with a first unit (11a) and at least one second connection member (1b) is associated with a second unit (11b), wherein a first connection member (1a) and a second connection member (1b) form a pair (6) of connections, wherein the connection members (1a, 1b) of a pair (6) of connections each have a plurality of contacts (2), wherein the connection members (1a, 1b) of a pair (6) of connections are aligned axially parallel in relation to one another and make magnetic contact with one another, and wherein the connection members (1a, 1b) of a pair (6) of connections can be rotated relative to one another in the contact-connected state,
**characterized in that**
the connection members (1a, 1b) of a pair (6) of connections have a mechanical guide (5, 7 or 13), which is arranged to limit axial displacement of the connection members (1a, 1b) in the contact-connected state, and wherein the mechanical guide (5, 7 or 13) is in the form of a mechanical rough guide, so that the mechanical rough guide allows simple guidance of the connection members to one another and exact and precise alignment is then performed magnetically.

2. Magnetic connection apparatus according to Claim 1,
**characterized in that**
the connection members (1a, 1b) of a pair (6) of connections each comprise at least one magnet element (3) for making magnetic contact, and at least one magnet element (3) of a pair (6) of connections is in the form of a permanent magnet.

3. Magnetic connection apparatus according to Claim 2, **characterized in that**
the connection members (1a, 1b), the magnet elements (3) and the contacts (2) of a pair (6) of connections are formed in such a way that, when magnetic contact is made, the contacts (2) of the respective connection members (1a, 1b) make electrical contact with one another.

4. Magnetic connection apparatus according to Claim 2 or 3, **characterized in that**
the magnet elements (3) are formed in such a way that electrical and magnetic contact can be made with the connection members (1a, 1b) of a pair (6) of connections in at least one predetermined orientation and said connection members magnetically attract in this orientation, wherein the connection members (1a, 1b) of a pair (6) of connections are configured in such a way that the connection members (1a, 1b) of a pair (6) of connections can roll on one another at least over a partial area of the casing surface of the connection members (1a, 1b) in the event of a relative rotation in relation to one another in the contact-connected state, wherein the electrical and magnetic contact-connection is maintained.

5. Magnetic connection apparatus according to one of Claims 2 to 4, **characterized in that**
the magnet elements (3) of the connection members (1a, 1b) of a pair (6) of connections are aligned in respect of their polarity in such a way that the connection members (1a, 1b) of a pair (6) of connections magnetically attract only in an orientation of the first unit (11a) to the second unit (11b).

6. Magnetic connection apparatus according to one of Claims 2 to 5, **characterized in that**
the connection members (1a, 1b) of a pair (6) of connections each have at least two magnet elements (3).

7. Magnetic connection apparatus according to one of Claims 4 to 6, **characterized in that**
at least one partial area of the casing surfaces of the connection members (1a, 1b) on which the connection members (1a, 1b) of a pair (6) of connections can roll on one another runs in a curved and/or arcuate manner and/or has a radius.

8. Magnetic connection apparatus according to Claim 7, **characterized in that**
the connection members (1a, 1b) of a pair (6) of connections are formed in a rod-like manner.

9. Magnetic connection apparatus according to Claim 8, **characterized in that**
the rod-like connection members (1a, 1b) have a magnet element (3) at their respective ends, and the plurality of contacts (2) are arranged between the magnet elements (3).

10. Magnetic connection apparatus according to one of Claims 4 to 9, **characterized in that**
the contacts (2) and/or the magnet elements (3) run in a curved and/or arcuate manner and/or have a radius in the rolling direction of the connection members (1a, 1b) at least over the length of the partial area.

11. Magnetic connection apparatus according to one of Claims 2 to 10, **characterized in that**
the magnet elements (3) are formed in a cylindrical and/or disc-like and/or annular and/or partially annular manner.

12. Magnetic connection apparatus according to one of Claims 1 to 11, **characterized in that**
at least some of the contacts (2) of the connection members (1a, 1b) of a pair (6) of connections, which contacts are aligned with one another and make electrical contact, make magnetic contact with one another.

13. Magnetic connection apparatus according to Claim 12,
**characterized in that**
at least some of the contacts (2) are in the form of magnet elements (3).

14. Electronic system having at least one first unit (11a), one second unit (11b) and a magnetic connection apparatus according to one of Claims 1 to 13, **characterized in that**
the units (11a, 11b) are connected by means of the magnetic connection apparatus.

## Revendications

1. Dispositif de liaison magnétique pour relier deux unités, dans lequel au moins un premier élément de liaison (1a) est affecté à une première unité (11a) et au moins un second élément de liaison (1b) est affecté à une seconde unité (11b), dans lequel un premier élément de liaison (1a) et un second élément de liaison (1b) forment une paire d'éléments de liaison (6), dans lequel les éléments de liaison (1a, 1b) d'une paire d'éléments de liaison (6) présentent chacun une pluralité de contacts (2), dans lequel les éléments de liaison (1a, 1b) d'une paire d'éléments de liaison (6) sont disposés avec leurs axes parallèles et en contact magnétique l'un avec l'autre et dans lequel les éléments de liaison (1a, 1b) d'une paire d'éléments de liaison (6) peuvent pivoter l'un par rapport à l'autre lorsqu'ils sont en contact, **caractérisé en ce que**,
les éléments de liaison (1a, 1b) d'une paire d'éléments de liaison (6) présentent un guidage mécanique (5, 7 ou 13) agencé pour limiter un déplacement axial des éléments de liaison (1a, 1b) lorsqu'ils sont en contact, et dans lequel le guidage mécanique (5, 7 ou 13) est réalisé sous la forme d'un guidage mécanique approximatif, de sorte que le guidage mécanique approximatif permette une mise en place aisée des éléments de liaison l'un sur l'autre, et l'alignement exact et précis s'effectue alors magnétiquement.

2. Dispositif de liaison magnétique selon la revendication 1,
**caractérisé en ce que**,
les éléments de liaison (1a, 1b) d'une paire d'éléments de liaison (6) comportent chacun au moins un élément magnétique (3) pour la mise en contact magnétique et au moins un élément magnétique (3) d'une paire d'éléments de liaison (6) est réalisé sous la forme d'un aimant permanent.

3. Dispositif de liaison magnétique selon la revendication 2,
**caractérisé en ce que**,
les éléments de liaison (1a, 1b), les éléments magnétiques (3) et les contacts (2) d'une paire d'éléments de liaison (6) sont agencés de sorte que, dans le cas d'une mise en contact magnétique, les contacts (2) des éléments de liaison (1a, 1b) respectifs entrent en contact électrique les uns avec les autres.

4. Dispositif de liaison magnétique selon la revendication 2, ou 3,
**caractérisé en ce que**,
les éléments magnétiques (3) sont agencés de sorte que les éléments de liaison (1a, 1b) d'une paire d'éléments de liaison (6) peuvent entrer en contact électrique et magnétique dans au moins une orientation prédéfinie et qu'ils s'attirent magnétiquement dans cette orientation, dans lequel les éléments de liaison (1a, 1b) d'une paire d'éléments de liaison (6) sont agencés de sorte que, lorsqu'ils sont en contact, les éléments de liaison (1a, 1b) d'une paire d'éléments de liaison (6) peuvent, lors d'une rotation relative de l'un par rapport à l'autre, rouler l'un sur l'autre sur au moins une surface partielle de la surface externe des éléments de liaison (1a, 1b), le contact électrique et magnétique restant établi.

5. Dispositif de liaison magnétique selon l'une des revendications 2 à 4,
**caractérisé en ce que**,
les éléments magnétiques (3) des éléments de liaison (1a, 1b) d'une paire d'éléments de liaison (6) sont alignés en ce qui concerne leur polarité de telle sorte que les éléments de liaison (1a, 1b) d'une paire d'éléments de liaison (6) ne s'attirent magnétiquement que dans une orientation de la première unité (11a) vers la seconde unité (11b).

6. Dispositif de liaison magnétique selon l'une des revendications 2 à 5,
**caractérisé en ce que**,
chaque élément de liaison (1a, 1b) d'une paire d'éléments de liaison (6) est pourvu d'au moins deux éléments magnétiques (3).

7. Dispositif de liaison magnétique selon l'une des revendications 4 à 6,
**caractérisé en ce que**,
au moins une surface partielle des surfaces externes des éléments de liaison (1a, 1b), sur lesquelles les éléments de liaison (1a, 1b) d'une paire d'éléments de liaison (6) peuvent rouler l'un sur l'autre, est courbe et/ou arquée et/ou présente un rayon.

8. Dispositif de liaison magnétique selon la revendication 7,
**caractérisé en ce que**,
les éléments de liaison (1a, 1b) d'une paire d'éléments de liaison (6) sont en forme de tige.

9. Dispositif de liaison magnétique selon la revendication 8,
**caractérisé en ce que**,
les éléments de liaison (1a, 1b) en forme de tige sont pourvus à chacune de leurs extrémités frontales d'un élément magnétique (3) et **en ce qu'**une pluralité de contacts (2) est disposée entre les éléments magnétiques (3).

10. Dispositif de liaison magnétique selon l'une des revendications 4 à 9,
**caractérisé en ce que**,
les contacts (2) et/ou les éléments magnétiques (3) sont courbes et/ou arqués et/ou présentent un rayon au moins sur la longueur de la surface partielle dans la direction du pivotement des éléments de liaison (1a, 1b).

11. Dispositif de liaison magnétique selon l'une des revendications 2 à 10,
**caractérisé en ce que**,
les éléments magnétiques (3) sont réalisés en forme de cylindre et/ou de disque et/ou d'anneau et/ou d'une partie d'anneau.

12. Dispositif de liaison magnétique selon l'une des revendications 1 à 11,
**caractérisé en ce que**,
au moins une partie des contacts électriques (2) des éléments de liaison (1a, 1b) d'une paire d'éléments de liaison (6), alignés et en contact électrique, établissent un contact magnétique les uns avec les autres.

13. Dispositif de liaison magnétique selon la revendication 12,
**caractérisé en ce que**,
au moins une partie des contacts (2) est réalisée sous la forme d'éléments magnétiques (3).

14. Système électronique avec au moins une première unité (11a), une seconde unité (11b) et un dispositif de liaison magnétique selon l'une des revendications 1 à 13,
**caractérisé en ce que**,
les unités (11a, 11b) sont reliées par l'intermédiaire du dispositif de liaison magnétique.
